# EUROPÄISCHE PATENTSCHRIFT

(11) **EP 2 957 479 B1**
(45) Veröffentlichungstag und Bekanntmachung des Hinweises auf die Patenterteilung: **16.05.2018**
(21) Anmeldenummer: 15171171.0
(22) Anmeldetag: 09.06.2015
(51) Int. Cl.: B62B 7/06, B62B 7/08

(54) **KINDERWAGENGESTELL UND KINDERWAGEN**
PRAM CHASSIS AND PRAM
STRUCTURE DE POUSSETTE ET POUSSETTE

(30) Priorität: 16.06.2014 DE 102014108428; 21.07.2014 DE 102014110215
(43) Veröffentlichungstag der Anmeldung: 23.12.2015
(73) Patentinhaber: CYBEX GmbH, 95448 Bayreuth (DE)
(72) Erfinder: POS, Martin, 95444 Bayreuth (DE)
(74) Vertreter: Popp, Eugen

(56) Entgegenhaltungen:
- EP-A1- 2 127 995
- WO-A1-2009/132985
- WO-A1-2010/052257
- WO-A1-2013/175145
- GB-A- 252 559
- GB-A- 2 489 488

## Beschreibung

Die Erfindung betrifft ein Kinderwagengestell, insbesondere Kindersportwagengestell, Buggygestell oder dergleichen Fahrzeuggestell für Kinder, gemäß dem Oberbegriff des Anspruchs 1 sowie einen Kinderwagen gemäß Anspruch 21. Kinderwagengestelle der hier angesprochenen Art, insbesondere Kindersportwagengestelle, Buggys oder dergleichen Fahrzeuge für Kinder sind seit Langem bekannt und dienen dem praktischen Transport von Babys und Kleinkindern. Problematisch bei den bekannten Kinderwagengestellen ist häufig der Platzbedarf im Nichtbenutzungszustand. Insbesondere für den Transport müssen Kinderwagenstelle so klein wie möglich zusammengefaltet werden, wobei die Umwandlung des Kinderwagengestells so einfach wie möglich für einen Benutzer vonstattengehen sollte. Viele bekannte Kinderwagengestelle sind insbesondere hinsichtlich der Umwandlung von einer Fahr- in eine Transportstellung schwer zu handhaben und ermöglichen nur eine Umwandlung des Kinderwagengestells in einen einzigen Nichtbenutzungszustand. Ein solches Kinderwagengestell ist z.B. aus dem Dokument EP2127995A1 bekannt. Aufgabe der vorliegenden Erfindung ist es daher, ein verbessertes Kinderwagengestell zu schaffen, welches besonders einfach und flexibel durch einen Benutzer handhabbar und umwandelbar ist.

Zur Lösung der oben genannten Aufgabe wird ein Kinderwagengestell mit den Merkmalen des Anspruchs 1 vorgeschlagen.

Das erfindungsgemäß ausgebildete Kinderwagengestell umfasst zwei Hinterräder sowie mind. ein Vorderrad, sowie einen Schieber zum Verschieben des Kinderwagengestells und Befestigungsmittel zum Befestigen eines Kinderwagenaufsatzes. Von Bedeutung ist, dass die Hinterräder und das mind. eine Vorderrad bzw. deren Drehachsen jeweils über ein oder mehrere hintere und vordere Stabilisierungsstreben um eine sich etwa parallel zur gemeinsamen Drehachse der Hinterräder erstreckende Mittelachse herum gelenkig miteinander verbunden sind derart, dass sie aus einer auseinandergespreizten Fahrstellung in eine vollständig zusammengefaltete Transportstellung und umgekehrt faltbar, und zwischen diesen beiden Stellungen in mindestens eine weitere, insbesondere eine Abstellposition, einrastbar sind.

Ein wesentlicher Punkt der Erfindung liegt darin, dass das Kinderwagengestell aus einer Fahrstellung in eine Transportstellung umwandelbar ist. In der Transportstellung weist das Kinderwagengestell einen Endanschlag auf, der, nach Wunsch, mit einem weiteren Rast- und/oder Arretierzustand kombiniert sein kann. Alternativ ist die Transportstellung nicht arretiert, was in vorteilhafter Weise ein schnelles Entfalten des Kinderwagengestells in die Fahrstellung ermöglicht. In der Abstellposition, welche sich hinsichtlich ihrer Faltstellung zwischen der Faltstellung des Kinderwagengestells in Fahrstellung und der Faltstellung des Kinderwagengestells in Transportstellung befindet, ist das Kinderwagengestell verrastbar, wobei das das Kinderwagengestell in der Abstellposition, einen Rast- und/oder Arretiermechanismus aufweist, der beim Falten des Kinderwagengestells nach Wunsch betätigbar ist.

Auf diese Weise lässt sich das Kinderwagengestell aus einer Fahrstellung nicht nur in einen vollkommen zusammengefalteten, zum Transport geeigneten Zustand verlagern. Vielmehr ist es darüber hinaus möglich, das Kinderwagengestell in eine standfähige Abstellposition umzuwandeln, in der das Kinderwagengestell eine geringe Größe aufweist und somit ein geringer Platzbedarf besteht, in dem das Kinderwagengestell aber dennoch selbstständig stehen kann.

Sofern die Transportstellung mit einem Rast- und/oder Arretiermechanismus kombiniert ist, wie es eine optionale Ausführungsform der Erfindung vorsieht, ist es durch die vorliegende Erfindung möglich, in vollständig zusammengefalteten Zustand des Kinderwagengestells den Schieber auszufahren, um den Kinderwagen mitsamt dem Kinderwagenaufsatz auf den zwei Hinterrädern zu ziehen oder zu schieben. Gemäß dieser Ausführungsform der Erfindung sind die Stabilisierungsstreben neben der Fahrstellung auch in der vollständig zusammengefalteten Transportstellung einrastbar. Diese Option kommt insbesondere dann in Betracht, wenn der Kinderwagen auf schwierigem, insbesondere auf unebenem Gelände, eingesetzt werden soll.

Gemäß einer weiteren Ausführungsform der Erfindung weist das Kinderwagengestell in der Fahrstellung eine Rastposition bzw. einen Rast- und/oder Arretierzustand auf, wobei die auseinandergespreizte Fahrstellung der Stabilisierungsstreben über eine Gelenkverbindung zwischen hinteren und vorderen Stabilisierungsstreben fixierbar ist. Durch diese vorteilhafte Ausführungsform ist gewährleistet, dass die auseinandergespreizte Fahrstellung nicht nur schwerkraftbedingt aufrechterhalten wird, wenn die Stabilisierungsstreben, respektive die Hinterräder und das mindestens eine Vorderrad, durch die Wirkung der Schwerkraft in die voll auseinandergespreizte Fahrstellung gleiten bzw. rollen, sondern auch dann, wenn das Kinderwagengestell beispielsweise hochgehoben wird, um es beispielsweise über einen Treppenabsatz zu heben.

Ebenso ist es erfindungsgemäß vorgesehen, dass die Stabilisierungsstreben auch in der vollständig zusammengefalteten Transportstellung und/oder in der mindestens einen weiteren Stellung, insbesondere Abstellposition über die Gelenkverbindung zwischen hinteren und vorderen Stabilisierungsstreben fixierbar und bei Bedarf entriegelbar sind.

In vorteilhafter Weise dient die Gelenkverbindung erfindungsgemäß somit als Multifunktionsver- und -entriegeleinheit mit welcher die Faltfunktionalität des erfindungsgemäßen Kinderwagengestells betätigt werden kann.

Ferner lässt sich die Umwandlung des Kinderwagengestells gemäß der vorliegenden Erfindung besonders einfach durch eine vorteilhafte Schalteinheit und eine Verlagerung des Schiebers bewerkstelligen.

Zu dem vorgenannten Zweck ist es vorteilhaft, wenn die auseinandergespreizte Fahrstellung der Stabilisierungsstreben einerseits und die mindestens zwei Rastpositionen derselben andererseits über die Gelenkverbindung zwischen hinteren und vorderen Stabilisierungsstreben fixierbar sind. Dies erfolgt vorzugsweise über die bereits erwähnte Schalteinheit, mittels der die Gelenkverbindung aus einer Fixierstellung in eine Freigabestellung und umgekehrt schaltbar, insbesondere entrastbar ist.

Bei einer Ausführungsform eines erfindungsgemäß ausgebildeten Kinderwagengestells ist jedes der beiden Hinterräder mit dem mind. einen Vorderrand über ein Verbindungsstück verbunden. Die Verbindungsstücke sind faltbar ausgebildet derart, dass sie ein Zusammen- oder Auseinanderklappen bzw. -falten der hinteren und vorderen Stabilisierungsstreben um die erwähnte Gelenkverbindung bzw. die dadurch definierte Mittelachse herum zwängungsfrei ermöglichen bzw. nicht behindern.

Vorteilhafterweise weisen die Verbindungsstücke etwa auf halbem Weg zwischen einem Hinterrad und einem Vorderrad ein Gelenk auf. Durch das Gelenk kann die Faltbarkeit eines Verbindungsstücks sichergestellt werden. An einem proximalen Ende eines Verbindungsstücks ist vorzugsweise ein Fußbetätigungsmechanismus zum Einleiten des Faltvorgangs der Stabilisierungsstreben und gegebenenfalls auch der Verbindungsstücke angeordnet. Sobald ein Benutzer den Fußbetätigungsmechanismus betätigt und vorher ein Verriegelungsmechanismus der Schalteinheit gelöst wurde, kann der Faltvorgang der Verbindungsstücke eingeleitet und der Platzbedarf des Kinderwagengestells folglich deutlich reduziert werden. Alternativ zu dem Fußbetätigungsmechanismus kann über einen Seilzug oder dergleichen Mechanismus eine handbetriebene Einleitung des Faltvorgangs vorgesehen sein. Die Verbindungsstücke bilden vorzugsweise einen Teil eines Korbaufnahmegestänges des Kinderwagengestells. Vorteilhafterweise sind die Befestigungsmittel zum Befestigen eines Kinderwagenaufsatzes im Bereich einer Mittelachse des Kinderwagengestells angeordnet.

Vorteilhafterweise sind ein oder mehrere hintere Stabilisierungsstreben zwischen jedem Hinterrad und der Mittelachse des Kinderwagengestells und ein oder mehrere vordere Stabilisierungsstreben zwischen jedem Vorderrad und der Mittelachse vorgesehen. Die Stabilisierungsstreben können zum Verriegeln des Faltmechanismus der Verbindungsstücke bzw. zum Freigeben desselben dienen. In der verriegelten Position sorgen die Stabilisierungsstreben dafür, dass das Kinderwagengestell im normalen Benutzungszustand eine hohe Stabilität aufweist. Gleichzeitig dienen die Stabilisierungsstreben als Blockierelemente, die ein Zusammenfalten des Kinderwagengestells durch Falten der Verbindungsstücke verhindern. Die vorderen und hinteren Stabilisierungsstreben bilden zusammen mit den Verbindungsstücken eine im Wesentlichen dreieckige Anordnung.

Vorzugsweise münden die vorderen und die hinteren Stabilisierungsstreben im Bereich der distalen Enden des Schiebers jeweils in eine Schalteinheit. Die Schalteinheit umfasst einen Betätigungsabschnitt sowie einen vorderen und einen hinteren Lagerabschnitt, wobei der Betätigungsabschnitt zur Aufnahme eines distalen Endes des Schiebers, der hintere Lagerabschnitt zur Aufnahme des proximalen Endes der hinteren Stabilisierungsstrebe(n) und der vordere Lagerabschnitt zur Aufnahme des proximalen Endes der vorderen Stabilisierungsstrebe(n) dient. Der vordere und der hintere Lagerabschnitt sind vorteilhafterweise entlang der Mittelachse unmittelbar nebeneinander angeordnet. Die Mittelachse verbindet dabei vorzugsweise die zwei Schalteinheiten, von denen jede mit einem distalen Ende des U-förmigen Schiebers zusammenwirkt.

Vorteilhafterweise sind der hintere und der vordere Lagerabschnitt in einem normalen Benutzungszustand des Kinderwagengestells drehfest miteinander verbindbar. Zum Einleiten eines Faltvorgangs der Verbindungsstücke sind der hintere und der vordere Lagerabschnitt hingegen drehbar miteinander verbindbar. Ein Umschalten zwischen einer drehbaren und einer drehfesten Verbindung zwischen dem hinteren und dem vorderen Lagerabschnitt einer Schalteinheit wird vorteilhafterweise durch eine Verlagerung des Schiebers in dem Betätigungsabschnitt der jeweiligen Schalteinheit erzielt. Auf diese Weise kann durch eine einzige einhändige Bedienung des Schiebers die drehfeste Verbindung zwischen dem hinteren und dem vorderen Lagerabschnitt gelöst werden, so dass die beiden Stabilisierungsstreben relativ zueinander um die Mittelachse gedreht werden können. In diesem Betriebszustand des Kinderwagengestells ist auch ein Falten der Verbindungsstücke zwischen einem Vorderrad und einem Hinterrad möglich. Eine Verlagerung des Schiebers in dem Betätigungsabschnitt bewirkt vorzugsweise eine Verlagerung eines Entriegelungsbolzens entlang der Mittelachse. Durch die Verlagerung des Entriegelungsbolzens kann folglich die drehfeste Verbindung zwischen dem hinteren und dem vorderen Lagerabschnitt gelöst werden.

Erfindungsgemäß ist der Schaltabschnitt starr mit der Mittelachse verbunden, also drehfest angeordnet.

Gemäß einer Ausführungsform der Erfindung umfassen die mit dem vorderen Lagerabschnitt fest verbundenen Befestigungsmittel zum Befestigen eines Kinderwagenaufsatzes einen elastisch vorgespannten Rastriegel, der mit einer am äußeren Umfang des hinteren Lagerabschnitts angeordneten Rastausnehmung korrespondiert und mit dieser Rastausnehmung ein sogenanntes "Soft lock" bildet. Dieser Rastmechanismus definiert die Abstellposition des Kinderwagengestells, in der die vorderen und die hinteren Stabilisierungsstreben nicht vollständig zusammengeklappt sind.

Die Schalteinheit umfasst ferner eine Rasteinrichtung, beispielsweise einen Raststift, der in der auseinandergespreizten Fahrstellung der Stabilisierungsstreben sich innerhalb einer Rastausnehmung befindet. Durch einen Betätigungsschieber, der längs verschieblich innerhalb der Schieberaufnahme gelagert ist, lässt sich der Raststift aus der Rastausnehmung heraus bewegen, und zwar in einen kreisbogenförmigen Führungsabschnitt, und zusammen mit dem Schieber in eine Endstellung bewegen, in der die vorderen und hinteren Stabilisierungsstreben vollständig zusammengefaltet sind. Zusammen mit dem Schieber sind die hinteren Stabilisierungsstreben in Richtung zu den vorderen Stabilisierungsstreben faltbar. Der kreisbogenförmige Führungsabschnitt befindet sich innerhalb des mit dem hinteren Stabilisierungsstreben verbundenen hinteren Lagerabschnitts.

Die vorgenannten Betätigungsschieber lassen sich beim vollständigen Einfahren des Schiebers durch an diesem angebrachte Schaltvorsprünge in die vorgenannte Entriegelungs bzw. Entrastungsstellung bewegen. Auf diese Art und Weise lässt sich die Schalteinheit durch den Schieber entriegeln.

Der kreisbogenförmige Führungsabschnitt kann eine Rastausnehmung kurz vor dem Endanschlag aufweisen, in die der Rastriegel bei Bedarf einführbar ist und zwar durch eine auf den Rastriegel einwirkende Federkraft. Auf diese Art und Weise lässt sich die Abstellposition des Kinderwagengestells fixieren. Die Entriegelung erfolgt dann in gleicher Weise wie die Entriegelung in der auseinandergespreizten Fahrstellung des Kinderwagengestells.

Gemäß einer alternativen Ausführungsform der Schalteinheit umfasst diese eine Verschiebeplatte, die an einem Ende einen, vorzugsweise zwei Rastvorsprünge, und/oder am gegenüberliegenden Ende einen weiteren Rastvorsprung aufweist. Diese Rastvorsprünge korrespondieren mit entsprechenden Rastausnehmungen an einer Schaltscheibe der Schalteinheit. Mittels des Schiebers können die vorgenannten Vorsprünge in eine Entriegelungsstellung gebracht werden. In dieser Stellung lässt sich die Schaltscheibe relativ zur Verschiebeplatte drehen, bis der eine Rastvorsprung in eine Ausnehmung eines federbelasteten Hakens eingreift. In dieser Stellung sind die vorderen und hinteren Stabilisierungsstreben vollständig in Transportstellung zusammengefaltet und verrastet. Zur Entrastung wird die Verschiebeplatte mittels des Schiebers in eine Entriegelungsstellung bewegt. Der kleine Verriegelungsvorsprung bewegt sich dann aus der zugeordneten Ausnehmung am Rasthaken heraus, sodass die Schaltscheibe wieder in die ursprüngliche Stellung zurückgedreht werden kann, nämlich in eine Stellung, in der die vorderen und hinteren Stabilisierungsstreben wieder vollständig auseinander gespreizt sind. Die Verschiebeplatte ist entgegen einer elastischen Vorspannung aus der Rastposition heraus bewegbar. Sofern gewünscht, kann die erfindungsgemäße Schalteinheit auch ein oder mehrere Zwischenraststellungen aufweisen.

Eine weitere Ausführungsform der Erfindung unterscheidet zwischen einem mit der Verschiebeplatte verbundenen Rastvorsprung einerseits und einem innerhalb eines kreisbogenförmigen Führungsabschnitts geführten zapfenartigen Vorsprung andererseits. Dieser zapfenartige Vorsprung ist dafür ausgelegt, als Drehanschlag zu dienen und Querlasten aufzunehmen. In den Endstellungen des Anschlagzapfens ist der Verriegelungsvorsprung querlastfrei. Der Verriegelungsvorsprung dient also nur zur Definition der Verriegelungsstellung in vollständig auseinander gespreizter Position der Stabilisierungsstreben, nimmt jedoch keine Querkräfte auf, so dass eine Ver- und vor insbesondere auch Entriegelung leicht und im Wesentlichen reibungsfrei erfolgen kann.

Die Schalteinheit ist vorzugsweise durch eine Verlagerung, insbesondere durch eine Schiebe- und/oder Drehbewegung des Schiebers betätigbar. Vorteilhafterweise ist der Betätigungsabschnitt relativ zu dem vorderen und dem hinteren Lagerabschnitt einer Schalteinheit drehbar gelagert. Auf diese Weise ist eine Drehbewegung und Verblockung der Drehposition des Schiebers möglich.

Zur Lösung der oben genannten Aufgabe wird auch ein Kinderwagen mit den Merkmalen des Anspruchs 21 vorgeschlagen. Der Kinderwagen umfasst ein Kinderwagengestell gemäß der vorliegenden Erfindung und einen Kinderwagenaufsatz, bei dem es sich beispielsweise um eine Kinderschale, ein Hochstuhlgestell, einen Kinder-Autositz, eine Tragetasche oder um einen sonstigen Kinderwagenaufsatz handeln kann.

Die Erfindung wird im Folgenden anhand der Zeichnung näher erläutert.

Es zeigen:
- Fig. 1: eine perspektivische Darstellung eines Kinderwagengestells gemäß der Erfindung;
- Fig. 2a-2d: verschiedene Betriebszustände des Kinderwagengestells gemäß der Erfindung;
- Fig. 3: eine perspektivische Darstellung eines Ausschnitts des Kinderwagengestells gemäß Fig. 1;
- Fig. 4: eine Stirnseitenansicht einer teilweise geöffneten Schalteinheit eines Kinderwagengestells gemäß der Erfindung;
- Fig. 5: eine perspektivische Darstellung einer teilweise geöffneten Schalteinheit eines Kinderwagengestells gemäß der Erfindung;
- Fig. 6: eine Stirnseitenansicht einer teilweise geöffneten Schalteinheit eines Kinderwagengestells gemäß der Erfindung;
- Fig. 7: eine perspektivische Darstellung einer teilweise geöffneten Schalteinheit eines Kinderwagengestells gemäß der Erfindung;
- Fig. 8: eine Stirnseitenansicht einer teilweise geöffneten Schalteinheit eines Kinderwagengestells gemäß der Erfindung;
- Fig. 9: eine perspektivische Darstellung einer teilweise geöffneten Schalteinheit eines Kinderwagengestells gemäß der Erfindung;
- Fig. 10: eine perspektivische Darstellung einer teilweise geöffneten Schalteinheit eines Kinderwagengestells gemäß der Erfindung;
- Fig. 11: eine perspektivische Darstellung eines Fußbetätigungsmechanismus des Kinderwagengestells gemäß der Erfindung;
- Fig. 12: eine schematische Darstellung der Schalteinheit;
- Fig. 13: eine schematische Darstellung der Funktion/Betätigung der Schalteinheit;
- Fig. 14a-14e: eine schematische Darstellung einer alternativen Schalteinheit in funktionellen Ansichten, und
- Fig. 15a-15b: eine schematische Darstellung einer teilweise geöffneten alternativen Schalteinheit eines Kinderwagengestells gemäß der Erfindung.

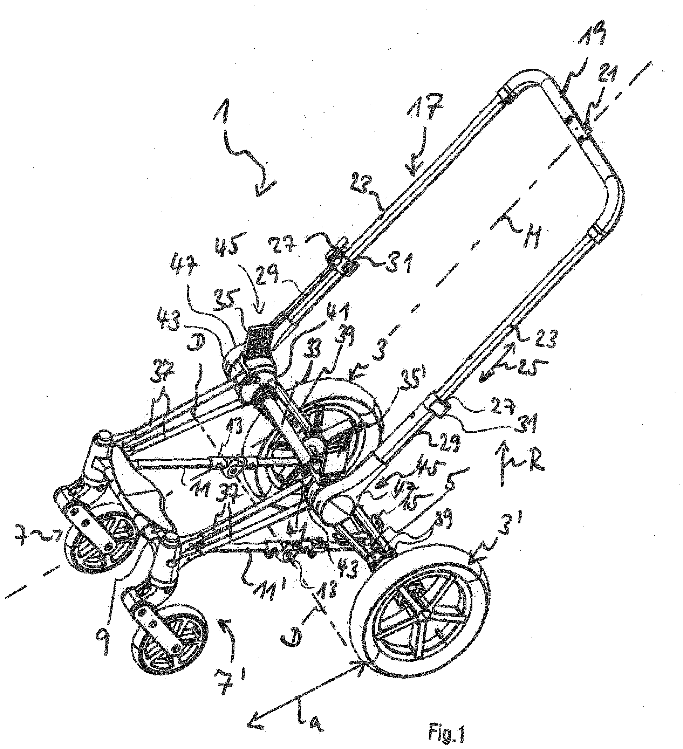

Fig. 1 zeigt eine perspektivische Darstellung eines Kinderwagengestells 1 gemäß der Erfindung. Das Kinderwagengestell 1 umfasst in der vorliegenden Ausführungsform zwei Hinterräder 3 und 3', die über eine gemeinsame Hinterachse 5 drehbar miteinander verbunden sind. Das Kinderwagengestell 1 umfasst ferner zwei Vorderräder 7 und 7', die ebenso wie die Hinterräder 3, 3' über eine gemeinsame Vorderachse 9 miteinander verbunden sind. Jeweils ein Hinterrad 3, 3' ist mit einem zugehörigen Vorderrad 7, 7' über ein Verbindungsstück 11 bzw. 11' zumindest mittelbar verbunden. Die Verbindungsstücke 11 und 11' können im Übrigen einstückig in Form einer U-förmigen, bügelförmigen oder einer rechteckförmigen Strebenkonstruktion ausgebildet sein.

Jedem Räderpaar ist also ein Verbindungsstück 11, 11' zugeordnet. Bezogen auf eine gedachte Mittelebene M des Kinderwagengestells 1 umfasst das Kinderwagengestell insgesamt also zwei Verbindungsstücke 11, 11', die jeweils ein Hinterrad 3 mit einem Vorderrad 7 bzw. die Vorderachse 9 und die Hinterachse 5 miteinander verbinden. Für den Fall, dass lediglich ein Vorderrad vorgesehen ist, verbinden zwei Verbindungsstücke 11, 11' die beiden Hinterräder 3, 3' mit ein und demselben Vorderrad.

Jedes der Verbindungsstücke 11, 11' umfasst ein Gelenk 13, welches im Wesentlichen auf halben Weg zwischen den Hinterrädern 3, 3' und den Vorderrädern 7, 7' und damit quasi in der Mitte der Verbindungsstücke 11, 11' angeordnet ist. Ein Verbindungsstück 11, 11' ist also vorzugsweise zweiteilig ausgebildet, wobei die beiden Teile über das Gelenk 13 schwenkbar miteinander verbunden sind.

Um eine Schwenkbewegung des Verbindungsstücks 11, 11' um eine Drehachse D des Gelenks 13 zu bewirken, ist in der vorliegenden Ausführungsform der Erfindung ein Fußbetätigungsmechanismus 15 vorgesehen. Mit dessen Hilfe kann ein Benutzer des Kinderwagengestells per Fuß eine Faltbewegung des Verbindungsstücks 11, 11' unter Einleitung einer Drehbewegung der Teilstücke des Verbindungsstücks 11, 11' um die Drehachse D bewirken. Die Faltbewegung des Verbindungsstücks 11, 11' und insbesondere eine Verlagerung des Gelenks 13 erfolgt dabei in Richtung des Pfeils R, so dass der Abstand a zwischen den Vorderrädern 7, 7' und den Hinterrädern 3, 3' verkleinert wird. Die Richtung R, in der sich das Gelenk 13 während des Faltvorgangs des Verbindungsstücks 11, 11' bewegt, entspricht einer Richtung, die vom Boden weg zeigt.

Das Kinderwagengestell 1 umfasst ferner einen im Wesentlichen U-förmig ausgebildeten Schieber 17, der zum Schieben des Kinderwagengestells 1 durch einen Benutzer vorgesehen ist. Hierzu umfasst der Schieber einen Griffbereich 19, der eine Höhenverstelleinrichtung 21 aufweist. Die Höhenverstelleinrichtung 21 kann beispielsweise mittels eines Bowdenzugs oder dergleichen Mechanismus zusammenwirken. Insbesondere wird die Höhenverstelleinrichtung 21 mittels eines federgelagerten Druckknopfes oder dergleichen Mechanismus betätigt. Mittels der Höhenverstelleinrichtung 21 lässt sich der Schieber 17 in Richtung der Schenkel 23 des U-förmigen Schiebers 17 verlagern (siehe Pfeil mit der Bezugsziffer 25). Die distalen Enden 27 des Schiebers 17 werden hierzu in einer Schieberaufnahme 29 geführt, wobei das Ausmaß der Höhenverstellung insgesamt durch Klemmmittel 31, die an der Schieberaufnahme 29 vorgesehen sind, begrenzt wird. Wenn also die Klemmmittel 31 geschlossen sind, lässt sich der Schieber 17 nur in gewissen Grenzen in Richtung des Pfeils 25 in der Schieberaufnahme 29 verlagern.

Das Kinderwagengestell 1 umfasst ferner eine Mittelachse 33, die sich im Wesentlichen in der axialen Richtung der Hinterachse 5 bzw. in Richtung der Vorderachse 9 erstreckt und damit im Wesentlichen parallel zu der Hinterachse 5 und der Vorderachse 9 ausgerichtet ist. Die Länge der Mittelachse 33 stimmt im Wesentlichen überein mit der Länge der Hinter- und/oder der Vorderachse. Fig. 1 macht noch deutlich, dass die Mittelachse im Wesentlichen auf halben Weg zwischen der Hinterachse 9 und der Vorderachse 5 und damit im Wesentlichen auf Höhe des Gelenks 13 angeordnet ist. In der Höhenrichtung besteht hingegen ein Abstand zwischen dem Gelenk 13 und der Mittelachse M.

Das Kinderwagengestell 1 umfasst ferner Befestigungsmittel 35, 35', die hier in Form von Haltearmen ausgebildet sind, die sich im Wesentlichen senkrecht zu der Mittelachse 33 erstrecken und die an gegenüberliegenden Enden der Mittelachse 33 angeordnet sind. Die Befestigungsmittel 35, 35' dienen zur Aufnahme eines Kinderwagenaufsatzes, insbesondere einer Kinderschale, einer Kindertasche, eines Hochstuhlgestells, eines Kinderautositzes oder dergleichen. Je nach aufzubringendem Kinderwagenaufsatz können die Befestigungsmittel 35, 35' anders ausgebildet sein oder insbesondere austauschbar in Form von Adapterelementen an dem Kinderwagengestell 1, beispielsweise mittels einer Schwalbenschwanzführung, befestigt sein.

Das Kinderwagengestell 1 umfasst ferner zwischen den Achsen angeordnete Stabilisierungsstreben, wobei zwischen jedem Vorderrad 7, 7' und der Mittelachse 33 mindestens eine, vorliegend zwei vordere Stabilisierungsstreben 37 vorgesehen sind, während zwischen den Hinterrädern 3, 3' und der Mittelachse 33 vorliegend auf jeder Seite der Mittelebene M jeweils zwei hintere Stabilisierungsstreben 39 vorgesehen sind. Auf beiden Seiten der Mittelebene M bilden in dem in Fig. 1 gezeigten Benutzungszustand des Kinderwagengestells 1 die Stabilisierungsstreben 37, 39 mit den Verbindungsstücken 11, 11' eine im Wesentlichen dreieckförmige Anordnung.

Im Bereich der Mittelachse 33 münden die vorderen Stabilisierungsstreben 37 in einen vorderen Lagerabschnitt 41, während die hinteren Stabilisierungsstreben in einen hinteren Lagerabschnitt 43 münden. Die Lagerabschnitte 41, 43 sind vorliegend im Wesentlichen zylindrisch ausgebildet und jeweils konzentrisch bezüglich der Mittelachse 33 angeordnet. Zu beiden Seiten der Mittelebene M des Kinderwagengestells 1 sind jeweils zwei Lagerabschnitte 41, 43 angeordnet. Die Stabilisierungsstreben können in die Lagerabschnitte 41, 43 insbesondere eingespritzt, eingeschraubt, eingesteckt, odgl. sein. Die vorderen und hinteren Lagerabschnitte 41, 43 sind jeweils an den Enden der Mittelachse 33 angeordnet, wobei auf jeder Seite der Mittelachse 33 jeweils ein hinterer Lagerabschnitt 43 unmittelbar in der axialen Richtung der Mittelachse 33 benachbart zu einem vorderen Lagerabschnitt 41 angeordnet ist und die Lagerabschnitte 41, 43 folglich aneinander angrenzen. Die Lagerabschnitte 41, 43 dienen also zur Aufnahme der proximalen Enden der Stabilisierungsstreben 37, 39. Die gegenüberliegenden distalen Enden der Stabilisierungsstreben 37, 39 sind hingegen mit den Rädern bzw. mit den zugeordneten Achsen verbunden, wobei die Verbindung zwischen den vorderen Stabilisierungsstreben 37 und den Vorderrädern 7, 7' bzw. der Vorderachse 5 fest, insbesondere unbeweglich sein kann, während die Verbindung zwischen den hinteren Stabilisierungsstreben 39 und den Hinterrädern 3, 3' bzw. der Hinterachse 5 vorzugsweise (dreh-)beweglich ist.

Die vorderen und hinteren Lagerabschnitte 41, 43 sind Teil einer Schalteinheit 45, die als kompakte mehrteilige Einheit ausgebildet ist, wobei jeweils eine Schalteinheit 45 an beiden Enden der Mittelachse 33 angeordnet ist. Neben den Lagerabschnitten 41, 43 umfasst die Schalteinheit 45 jeweils einen Betätigungsabschnitt 47, der unmittelbar benachbart zu einem Lagerabschnitt, vorliegend benachbart zu dem hinteren Lagerabschnitt 43, entlang bzw. an der Mittelachse 33 angeordnet ist.

Das Gehäuse des Betätigungsabschnitts 47 ist mit der Schieberaufnahme 29 verbunden. Denkbar ist auch eine einstückige Verbindung zwischen der Schieberaufnahme und dem Gehäuse des Betätigungsabschnitts 47. Der Betätigungsabschnitt 47 umfasst eine in Fig. 1 nicht erkennbare Durchgangsöffnung, die so ausgebildet ist, dass die Schenkel 23 und insbesondere die distalen Enden 27 des Schiebers 17 durch den Betätigungsabschnitt 47 hindurch verlagert werden können und an der gegenüberliegenden, d.h. der bodenzugewandten Seite des Betätigungsabschnitts 47 austreten können. Eine derartige Verlagerung des Schiebers 17 in Richtung des Pfeils 25 ist jedoch nur dann möglich, wenn die Klemmmittel 31 geöffnet sind und folglich die Begrenzung der Höhenverstellbarkeit des Schiebers 17 aufgehoben ist. Insbesondere kann die Durchgangsöffnung integral in der Schieberaufnahme 29 ausgebildet sein.

In einem in Fig. 1 gezeigten normalen Benutzungszustand des Kinderwagengestells 1 sind der hintere Lagerabschnitt 43 und der vordere Lagerabschnitt 41 drehfest miteinander verbunden. Eine entsprechende drehfeste Verbindung wird durch einen zugehörigen Betriebszustand der Schalteinheit 45, beispielsweise mittels einer Rast- oder Blockierverbindung zwischen den beiden Lagerabschnitten 41, 43, realisiert. Durch eine Verlagerung des Schiebers 17 in dem Betätigungsabschnitt 47 kann die drehfeste Verbindung zwischen den Lagerabschnitten 41, 43 aufgehoben werden. Die in Fig. 1 gezeigte feste Winkeleinstellung der Stabilisierungsstreben 37 und 39 zueinander wurde in diesem Betriebszustand der Schalteinheit 45 aufgehoben, so dass auch eine Verlagerung des Gelenks 13 der Verbindungsstücke 11, 11' in der Richtung R möglich ist. Bei einer entsprechenden Bewegung des Gelenks 13 wird gleichzeitig der Abstand a zwischen den Vorderrädern 7, 7' und den Hinterrädern 3, 3' reduziert, wodurch das Kinderwagengestell 1 in einen kompakten Transportzustand oder in einen "stand-alone"-Zustand, in dem das Kinderwagengestell 1 selbstständig standfähig ist, umgewandelt werden kann.

Fig. 1 macht noch deutlich, dass vorliegend die Befestigungsmittel 35, 35' mit dem hinteren Lagerabschnitt 43 verbunden sind. Wie gesagt kann die Verbindung über eine Schwalbenschwanzführung oder dergleichen formschlüssige Verbindung erfolgen, so dass die Befestigungsmittel austauschbar an dem Kinderwagengestell gelagert sind. Entsprechende eine Schwalbenschwanzführung ausbildende Mittel können insbesondere einstückig mit dem hinteren Lagerabschnitt 43 verbunden sein. Selbstverständlich ist auch eine entsprechende Verbindung mit dem vorderen Lagerabschnitt 41 oder einem sonstigen Element des Kinderwagengestells 1 möglich.

Nach einem ausreichend weiten Einführen der Schenkel 23 des Schiebers 17 in den Betätigungsabschnitt 47 wird nicht nur die drehfeste Verbindung zwischen dem hinteren und dem vorderen Lagerabschnitt 41, 43 freigegeben, sondern der Schieber 17 kann auch um die Mittelachse 33 herum in Richtung der Vorderräder 7, 7' verschwenkt werden und dort in einer geeigneten Rastposition einrasten.

Um die drehfeste Verbindung zwischen dem vorderen Lagerabschnitt 41 und dem hinteren Lagerabschnitt 43 wiederherzustellen, muss der Schieber 17 anschließend zunächst in eine ursprünglich in Fig. 1 gezeigte Benutzungsposition zurückverlagert werden. Um eine Drehbewegung des Schiebers 17 um die Mittelachse 33 herum zu ermöglichen, ist der Betätigungsabschnitt 47 relativ zu den Lagerabschnitten 41, 45 und relativ zu der Mittelachse 33 drehbeweglich auf bzw. an der Mittelachse 33 gelagert.

Die Schalteinheit 45 bildet insgesamt eine kompakte Einheit, die drei voneinander getrennte Elemente, nämlich den vorderen Lagerabschnitt 41, den hinteren Lagerabschnitt 43 und den Betätigungsabschnitt 47 umfasst, um eine einfache Umwandlung des Kinderwagengestells 1, beispielsweise für den Transport, zu gewährleisten. Die Schalteinheit 45 kann mindestens zwei Betriebszustände aufweisen, zwischen denen durch eine händische Verlagerung des Schiebers 17 umgeschaltet werden kann. In einem ersten Betriebszustand der Schalteinheit 45 besteht eine drehfeste Verbindung zwischen dem vorderen und dem hinteren Lagerabschnitt 41, 43, während in dem zweiten Betriebszustand eine drehbare Verbindung zwischen dem vorderen und dem hinteren Lagerabschnitt 41, 43 besteht.

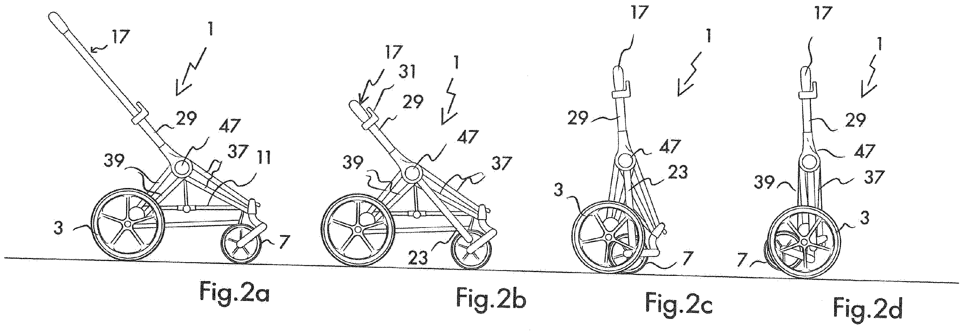

Fig. 2a-2d zeigen das Kinderwagengestell 1 in verschiedenen Betriebszuständen. Die Fig. 2a zeigt dabei den bereits in Fig. 1 dargestellten herkömmlichen Benutzungszustand des Kinderwagengestells 1 zum Befördern eines Babys oder Kindes mit Hilfe eines nicht dargestellten Kinderwagenaufsatzes.

Fig. 2b zeigt das Kinderwagengestell 1 in einem Benutzungszustand, in dem die Schenkel 23 des Schiebers 17 in gelöstem Zustand der Klemmmittel 31 durch den Betätigungsabschnitt 47 hindurchgeführt sind und damit eine drehfeste Verbindung zwischen dem vorderen Lagerabschnitt 41 und dem hinteren Lagerabschnitt 43 gelöst wurde. Die Stabilisierungsstreben 37 und 39 sind in diesem Betriebszustand folglich um die Mittelachse 33 herum relativ zueinander drehbeweglich gelagert.

Fig. 2c zeigt das Kinderwagengestell 1 in einem standfähigen Lagerzustand, in der die Größe des Kinderwagengestells 1 zwar deutlich reduziert ist, das Kinderwagengestell 1 jedoch noch selbstständig stehen kann, indem ein geringer Abstand a zwischen den Hinterrädern 3, 3' und den Vorderrädern 7, 7' aufrechterhalten wird.

Fig. 2d zeigt noch einen weiteren Betriebszustand des Kinderwagengestells 1, in dem die Verbindungsstücke 11, 11' mit Hilfe des Gelenks 13 maximal weit zusammengeklappt wurden, so dass der Abstand zwischen den Vorderrädern 7, 7' und den Hinterrädern 3, 3' maximal weit reduziert ist. In dieser Position kann das Kinderwagengestell 1 nicht selbstständig stehen. Es weist jedoch einen gegenüber dem in Fig. 2c gezeigten Betriebszustand noch weiter reduzierten Platzbedarf auf. In dem Betriebszustand gemäß Fig. 2d muss der Schieber 17 nicht zwangsläufig durch den Betätigungsabschnitt 47 geschoben werden. Vielmehr ist es auch denkbar, den Schieber 17 nach dem Zusammenklappen des Kinderwagengestells 1 wieder in den normalen Benutzungszustand auszufahren, so dass wie in dem in Fig. 2d gezeigten Zustand ein Kinderwagenaufsatz mit dem Kinderwagengestell 1 (nicht gezeigt) verbunden sein kann, und ein Benutzer das Kinderwagengestell 1 auf zwei Rädern ziehen oder schieben kann. Dieser Benutzungszustand ist insbesondere dann von Vorteil, wenn der Kinderwagen über unwegsames Gelände befördert werden soll. Die Reduzierung des Kinderwagengestells 1 auf zwei Räder ist in diesem Fall vorteilhaft und erleichtert insgesamt die Fortbewegung.

Die Fig. 2a-2d machen deutlich, dass die vorliegende Erfindung die Herstellung von mehreren Benutzungszuständen eines einzigen Kinderwagengestells 1 ermöglicht. So ist es neben dem in Fig. 2c gezeigten standfähigen Benutzungszustand auch möglich, einen minimalen Platzbedarf für den Transport des Kinderwagengestells 1 zu erzielen. Gleichzeitig kann in dem in Fig. 2d gezeigten Zustand das Kinderwagengestell 1 durch Ziehen oder Schieben auf zwei Rädern in vorteilhafter Weise in schwierigem Gelände benutzt werden. Für jeden Betriebszustand sind dabei zur Vereinfachten Benutzung entsprechende Rast- oder Arretierpositionen vorgesehen.

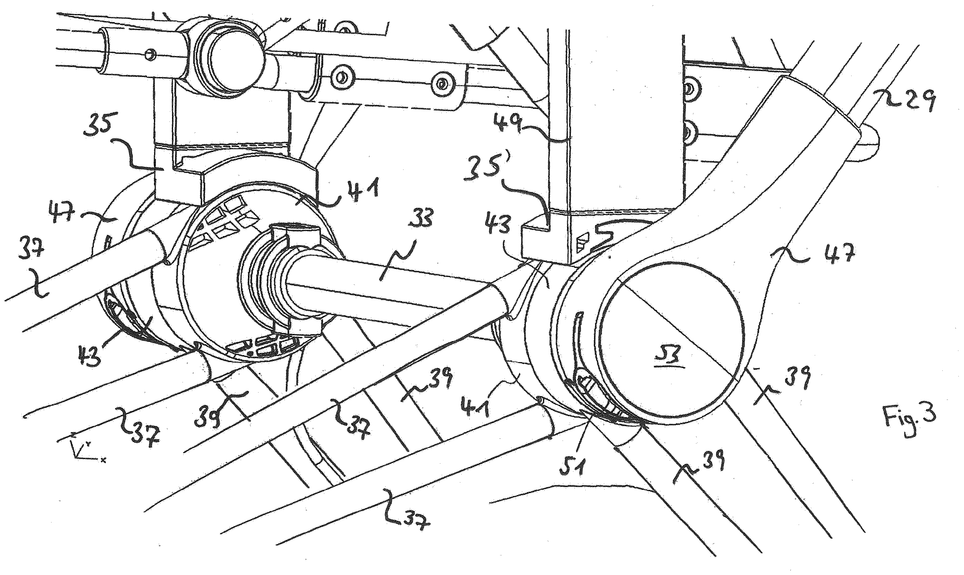

Die Schalteinheit 45, die eine einfache und flexible Umwandlung des Kinderwagengestells 1 in die in Fig. 2a-2d gezeigten Zustände ermöglicht, wird im Folgenden anhand der Fig. 3 bis 10 näher erläutert.

Fig. 3 zeigt eine perspektivische Darstellung eines Ausschnitts des Kinderwagengestells 1 gemäß Fig. 1. Gut zu erkennen ist in Fig. 3, dass die Befestigungsmittel 35, 35' mit der Schalteinheit 45 in Verbindung stehen. In der Fig. 3 angedeutet ist darüber hinaus ein Kinderwagenaufsatz 49, der mit den Befestigungsmitteln 35, 35' verbunden ist. Ebenfalls zu erkennen ist eine Durchgangsöffnung 51, die in dem Betätigungsabschnitt 47 angeordnet ist. Für den Fall, dass die drehfeste Verbindung zwischen dem vorderen Lagerabschnitt 41 und dem hinteren Lagerabschnitt 43 gelöst werden soll, muss der in Fig. 3 nicht dargestellte Schieber 17 bzw. dessen distale Enden 27, durch die Durchgangsöffnungen 51 hindurchgeschoben werden.

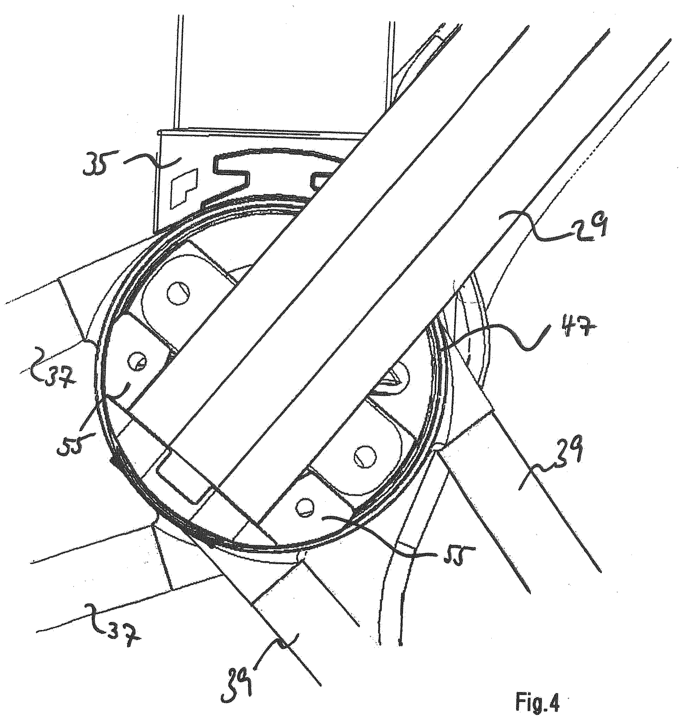

Fig. 4 zeigt eine Stirnseitenansicht des Betätigungsabschnitts 47, wobei die in Fig. 3 gezeigte Abdeckung 53 des Gehäuses des Betätigungsabschnitts 47 entfernt wurde. Die Figur macht deutlich, dass die Schieberaufnahme 29 in dem Betätigungsabschnitt 47 hineinragt und dort mit Hilfe von Führungselementen 55 gehalten wird. Die Führungselemente 55 sind vorzugsweise einstückig mit der Schieberaufnahme 29 verbunden und werden von Blockierelementen 56 ortsfest in dem Betätigungsabschnitt 47 gehalten.

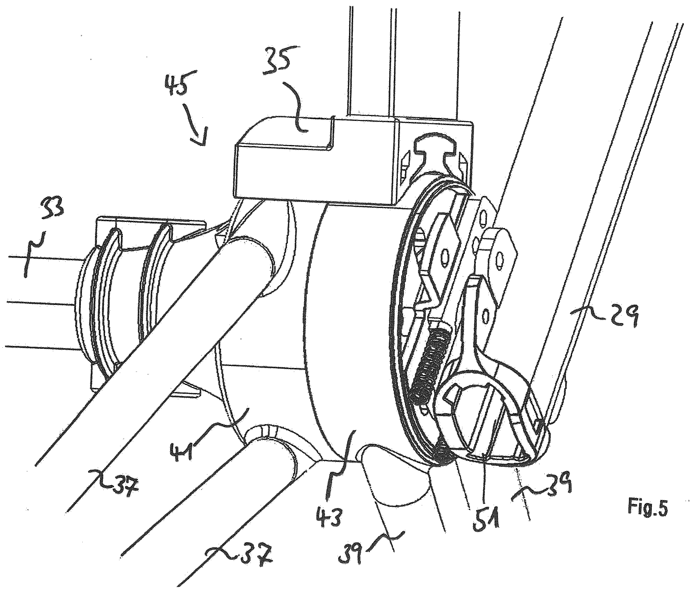

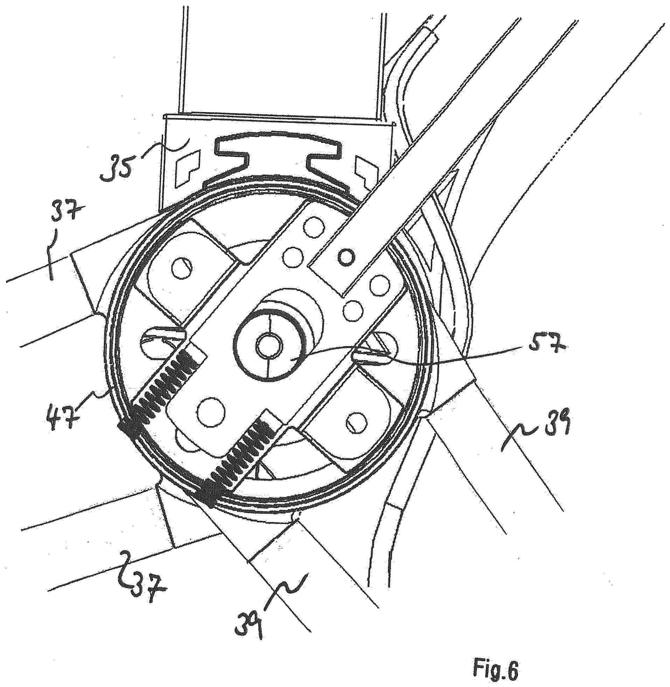

Fig. 5 zeigt eine entsprechende perspektivische Darstellung ohne das Gehäuse des Betätigungsabschnitts 47. An der dem hinteren Lagerabschnitt 43 zugewandten Seite ist die Schieberaufnahme 29 zumindest teilweise geöffnet, so dass der in Fig. 6 erkennbare (Betätigungs-)Bolzen 57 in das Innere der Schieberaufnahme 29 hineinragen kann. Es wird darüber hinaus deutlich, dass die Durchgangsöffnung 51 in der Schieberaufnahme 29 ausgebildet ist.

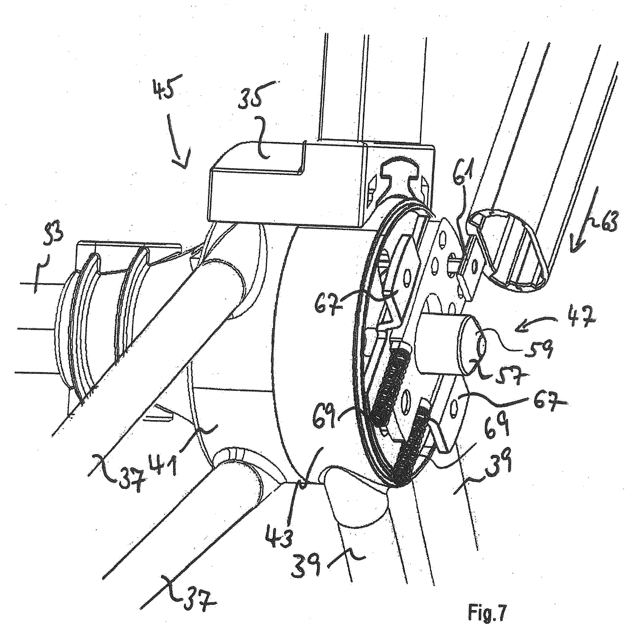

Fig. 6 und Fig. 7 zeigen eine Stirnseitenansicht und eine perspektivische Darstellung der Schalteinheit 45, wobei zur besseren Übersichtlichkeit die Schieberaufnahme 29 in dem Betätigungsabschnitt 47 nicht dargestellt ist. Der Bolzen 57 ist im Wesentlichen zentrisch in dem Betätigungsabschnitt 47 entlang der Mittelachse 33 angeordnet und darin federgelagert. Das distale Ende 59 des Bolzens 57 ist konisch ausgebildet und ragt mittels einer entsprechenden Aussparung in die in den Fig. 6 und 7 nicht dargestellte Schieberaufnahme 29 hinein.

Durch die konische Ausbildung des distalen Endes 59 des Bolzens 57 kann bei einer ausreichend weiten Verlagerung des Schenkels 23 des Schiebers 17 in der Schieberaufnahme 29 eine Verlagerung des Bolzens 57 entgegen der Federkraft bewirkt werden. Weiterhin wirkt der Schieber 17 und insbesondere dessen Schenkel 23 mit einem länglichen Betätigungselement 61 zusammen, welches bei einer Verlagerung des Schiebers 17 in Richtung des Pfeils 63 wiederum mit einer Verschiebeplatte 65 zusammenwirkt, deren Verlagerung durch Führungselemente 67 bestimmt wird. Die Führungselemente 67 sind dabei fest in dem Betätigungsabschnitt 47 installiert. Bei einer Verlagerung des Betätigungselements 61 in Richtung des Pfeils 63 erfolgt eine Verschiebung der Verschiebeplatte 65 ebenfalls in der Richtung des Pfeils 63, wobei die Verlagerung entgegen einer Federkraft zweier Federelemente 69 ausgeübt wird.

Der Bolzen 57 durchragt eine längliche bzw. ovale Durchgangsbohrung in der Verschiebeplatte 65, so dass der die Verschiebeplatte 65 durchragende Bolzen 57 eine Bewegung der Verschiebeplatte 65 in Richtung des Pfeils 63 nicht blockiert. Eine Verlagerung des Betätigungselements 61 in Richtung des Pfeils 63 erfolgt erst bei einer ausreichend weiten Verlagerung des Schiebers 17 in der Schieberaufnahme 29 bei einem geöffneten Klemmmittel 31.

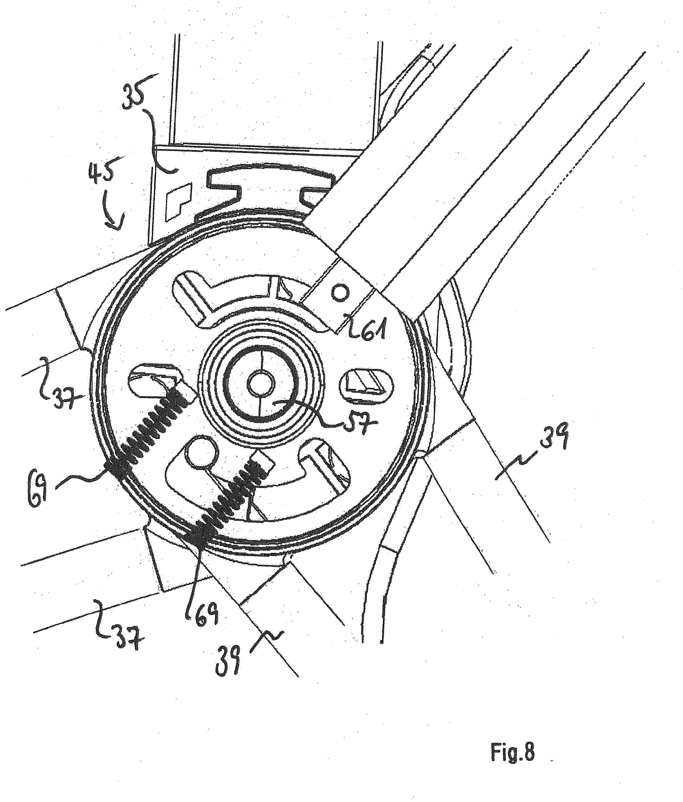

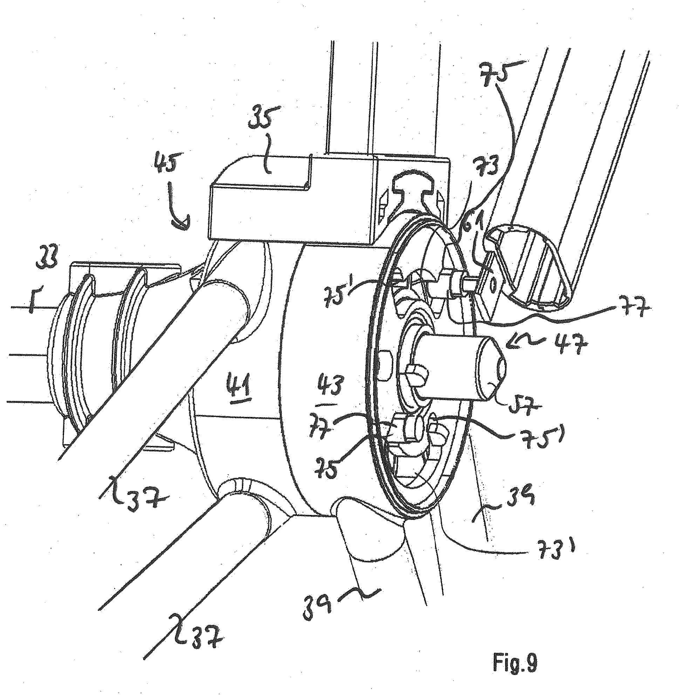

Fig. 8 zeigt noch eine Stirnseitenansicht der Schalteinheit 45, wobei aus Gründen der Übersichtlichkeit die Schieberaufnahme 29 und die Verschiebeplatte 65 sowie weitere Elemente des Betätigungsabschnitts 47 nicht dargestellt sind. Fig. 8 und Fig. 9 machen deutlich, dass mit dem hinteren Lagerabschnitt 43 ein kreisförmiges Scheibenelement 71 in Kontakt steht, das über zwei punktsymmetrisch angeordnete, teilkreisförmige Nuten 73, 73' verfügt, an deren beiden Enden jeweils eine Rastaussparung 75, 75' angeordnet ist. Ferner wird das kreisförmige Scheibenelement 71 von dem Bolzen 57 durchgriffen.

Das Betätigungselement 61 steht mit einem Bolzen 77 in Verbindung, der das kreisförmige Scheibenelement 71 durchgreift und in einer Rastaussparung 75 durch die Kraft der Federelemente 69, die auf die in den Fig. 8 und 9 nicht dargestellte Verschiebeplatte 65 wirken, eingerastet ist. Bei einer Verlagerung des Betätigungselements 61 und einer resultierenden Verlagerung der Verschiebeplatte 65 gegen die Kraft der Federelemente 69 wird der Bolzen 77 in die Nut 73 bzw. 73' eingeführt. In diesem Betriebszustand kann der Schieber 17 entlang der Nut 73 bzw. 73' um den Bolzen 57 herum rotieren, bis das gegenüberliegende Ende der Nut 73, 73' erreicht ist. Der Bolzen 77 rastet dann in die gegenüberliegende Rastaussparung 75 ein. In diesem Betriebszustand ist der Schieber 17 derart verriegelt, dass der Bolzen 57 solange in seiner eingebrückten Position verbleibt, bis der Schieber 17 wieder in seine Ursprungsposition zurück gedreht wird.

Die Verlagerung des Bolzens 47 entlang der Mittelachse 33 bewirkt durch eine geeignete mechanische Einrichtung das Lösen einer drehfesten Verbindung zwischen dem vorderen Lagerabschnitt 41 und dem hinteren Lagerabschnitt 43.

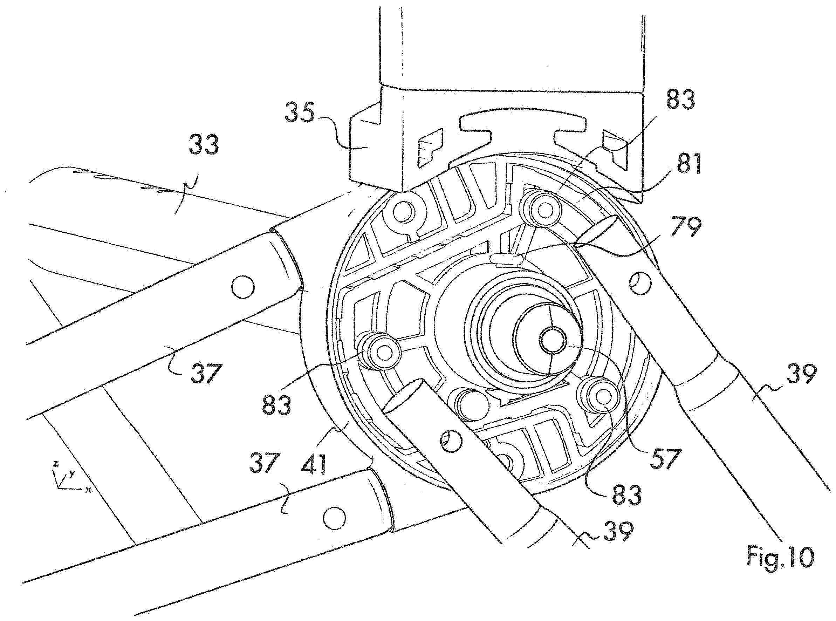

Eine beispielhafte Darstellung eines derartigen Mechanismus ist in Fig. 10 gezeigt. Die Figur macht deutlich, dass bei einer Verlagerung des Bolzens 57 entgegen einer in Fig. 10 nicht gezeigten Feder ein Mitnehmerelement 79 in Richtung der Mittelachse 33 verlagert wird, welches auf einen Blockiereinsatz 81 wirkt. Der Blockiereinsatz 81 ist so ankerförmig ausgebildet, dass er formschlüssig in eine komplementär ausgebildete Öffnung des vorderen Lagerabschnitts 41 eingreifen kann und auf der Mittelachse 33 verschieblich gelagert ist.

Der Blockiereinsatz 81 umfasst mehrere Bolzen 83, die zum Verblocken einer Drehverbindung zwischen dem hinteren und dem vorderen Lagerabschnitt in entsprechende Ausnehmungen des hinteren Lagerabschnitts 43 eingreifen können, wenn der Bolzen 57 nicht durch den Schieber 17 entgegen der Federkraft in der Mittelachse 33 verschoben wird. Eine Verlagerung des Blockiereinsatzes 81 wird dabei durch das Mitnehmerelement 79 bewirkt, wenn der Schieber 17 in dem Betätigungsabschnitt 47 eingeführt wird und dadurch den federgelagerten Bolzen 57 entlang der Mittelachse 33 verlagert.

Vorzugsweise wird dabei auch der Blockiereinsatz 81 entgegen einer Federkraft verlagert, so dass bei einem Lösen des Bolzens 57 der Blockiereinsatz 81 wieder in Richtung des hinteren Lagerabschnitts 43 verlagert wird, um auf diese Weise die drehfeste Verbindung zwischen den beiden Lagerabschnitten wiederherzustellen (erster Betriebszustand der Schalteinheit 45). Sobald die Blockade zwischen den Lagerabschnitten 41 und 43 gelöst ist (zweiter Betriebszustand der Schalteinheit 45), sind beide Lagerabschnitte 41, 43 drehbar zueinander auf der Mittelachse 33 gelagert, so dass der Winkel zwischen den hinteren und vorderen Stabilisierungsstreben 37, 39 veränderlich ist. In diesem Betriebszustand kann dann das Verbindungsstück 11, 11' zwischen den Vorderrädern und Hinterrädern mittels des Gelenks 13 derart gefaltet werden, dass der Abstand a zwischen den Vorderrädern 7, 7' und den Hinterrädern 3, 3' reduziert wird, um entweder einen Transportzustand des Kinderwagengestells 1 oder einen standfähigen Betriebszustand des Kinderwagengestells 1 herzustellen.

Fig. 10 macht noch deutlich, dass der Blockiereinsatz 81 formschlüssig in eine entsprechend ausgebildete Aussparung in dem vorderen Lagerabschnitt 41 einführbar ist. In dem vorliegenden Ausführungsbeispiel ist die Schalteinheit 45 ebenso wie seine Teilelemente (vorderer Lagerabschnitt 41, hinterer Lagerabschnitt 43 und Betätigungsabschnitt 47) im Wesentlichen zylindrisch ausgebildet. Grundsätzlich kann jedoch auch eine andere Form in Betracht kommen.

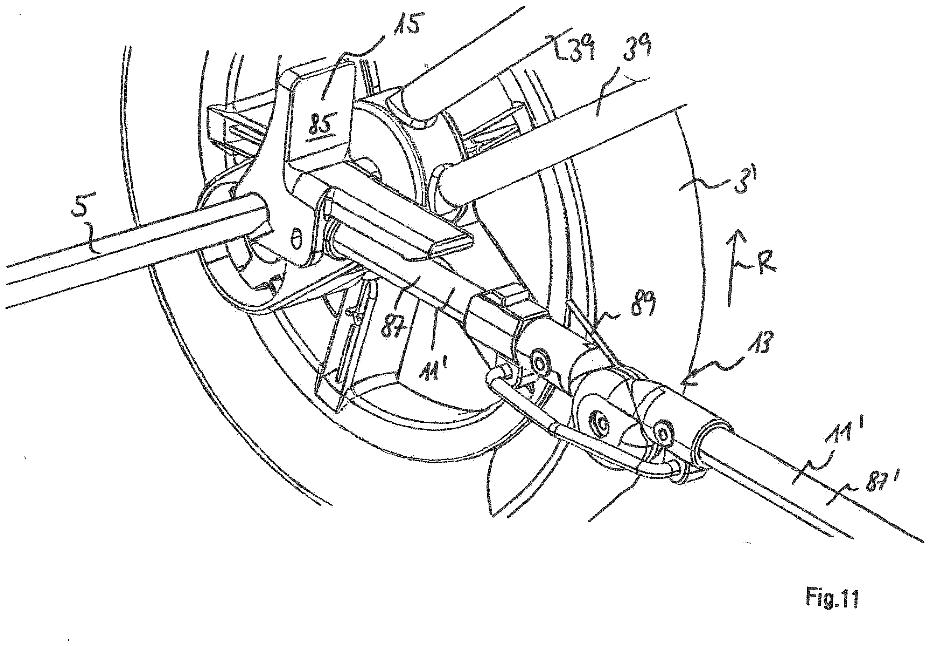

Fig. 11 zeigt eine Detaildarstellung des Fußbetätigungsmechanismus 15. Der Fußbetätigungsmechanismus 15 ist an der Hinterachse 5 befestigt und insbesondere drehbar daran gelagert. Der Fußbetätigungsmechanismus 15 weist vorliegend ferner eine Öffnung auf, in die ein Ende des Verbindungsstücks 11' hineinragt. Wenn also ein Schuh auf die Auftrittsfläche 85 des Fußbetätigungs-mechanismus 15 gestellt wird, rotiert der Fußbetätigungsmechanismus 15 um die Hinterachse 5, so dass zwei Teilabschnitte 87 und 87' des Verbindungsstücks 11' nicht mehr in einem Winkel von 180° zueinander angeordnet sind. Dadurch verlagert sich das Gelenk 13 in Richtung des Pfeils R entgegen der Kraft eines Federelements 89, welches in dem Gelenk 13 schneckenförmig angeordnet ist und dafür sorgt, dass sich das Kinderwagengestell 1 ausgehend von einem in Fig. 2c oder 2d gezeigten zusammengeklappten Zustand quasi automatisch durch die Kraft des Federelements 89 wieder in den Benutzungszustand entfalten kann. Wie eingangs bereits angedeutet wurde, kann anstelle des Fußbetätigungselements 15 auch eine von Hand betätigbare Einrichtung zum Betätigen des Gelenks 13 vorgesehen sein. Ein entsprechender Mechanismus könnte beispielsweise bereits durch die Betätigung des Bolzens 57 mittels des Schiebers 17 erfolgen.

Insgesamt offenbart die vorliegende Erfindung ein vorteilhaftes Kinderwagengestell 1, welches in verschiedene vorteilhafte Betriebszustände umwandelbar ist. Der jeweilige Zustand des Kinderwagengestells kann dabei durch geeignete Rastpositionen der beiden Lagerabschnitte 41, 43 zueinander festgelegt werden. Hierzu können beispielsweise die Lagerabschnitte 41, 43 entsprechende Arretiermittel in geeigneten Winkelstellungen zueinander aufweisen.

Durch die zentralen Schalteinheiten 45, von denen jeweils eine zu beiden Enden einer Mittelachse 33 angeordnet ist, kann durch eine einfache Betätigung durch Verlagerung des Schiebers 17 die drehfeste Verbindung zwischen den Lagerabschnitten 41, 43 der Schalteinheiten 45 gelöst werden, um auf diese Weise einen Faltvorgang des Kinderwagengestells 1 einzuleiten.

Vorzugsweise sind die beiden Lagerabschnitte 41 und 43 derart relativ zueinander verdrehbar, dass sie in mindestens zwei verschiedenen Winkelpositionen und damit in unterschiedlichen Positionen arretierbar sind. Auf diese Weise kann nicht nur ein standfähiger Betriebszustand des Kinderwagengestells 1 erzielt werden, sondern es ist darüber hinaus möglich, mittels einer weiteren Arretierposition ein vollständiges Zusammenfalten und damit eine Umwandlung des Kinderwagengestells 1 auf eine minimale Größe zu erzielen. In den jeweiligen Positionen kann der Schieber 17 entweder eingefahren oder ausgefahren werden, so dass grundsätzlich eine Benutzung des Kinderwagens in beiden Betriebszuständen möglich ist, sofern ein Kinderwagenaufsatz 49 mit dem Kinderwagengestell 1 in Verbindung steht.

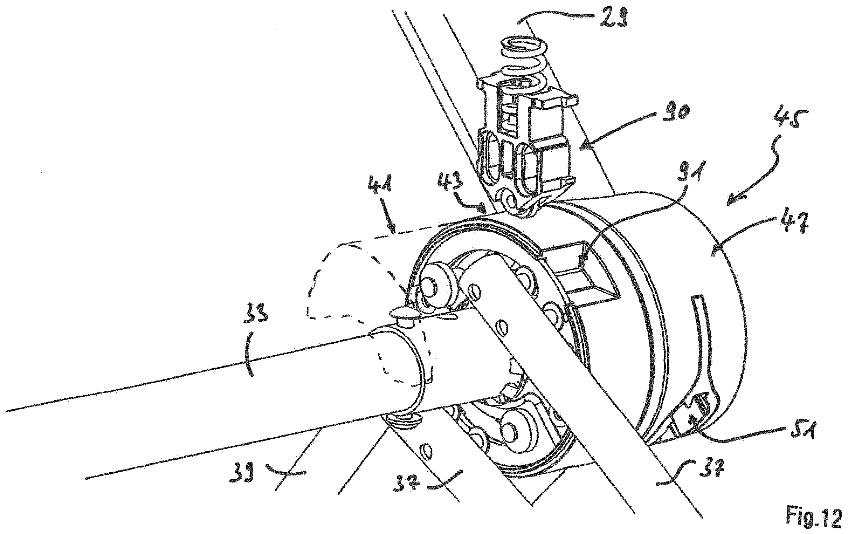

Fig. 12 zeigt eine Ausführungsform der Erfindung, wobei die mit dem vorderen Lagerabschnitt 41 fest verbundenen Befestigungsmittel 35 zum Befestigen eines Kinderwagenaufsatzes 49 umfassen einen elastisch vorgespannten Rastriegel 90, der mit einer am äußeren Umfang des hinteren Lagerabschnitts 43 angeordneten Rastausnehmung 91 korrespondiert und mit dieser Rastausnehmung 91 ein sogenanntes "Soft lock" bildet. Dieser Rastmechanismus definiert die sogenannte Abstellposition des Kinderwagengestells, in der die vorderen 37 und die hinteren 39 Stabilisierungsstreben nicht vollständig zusammengeklappt sind.

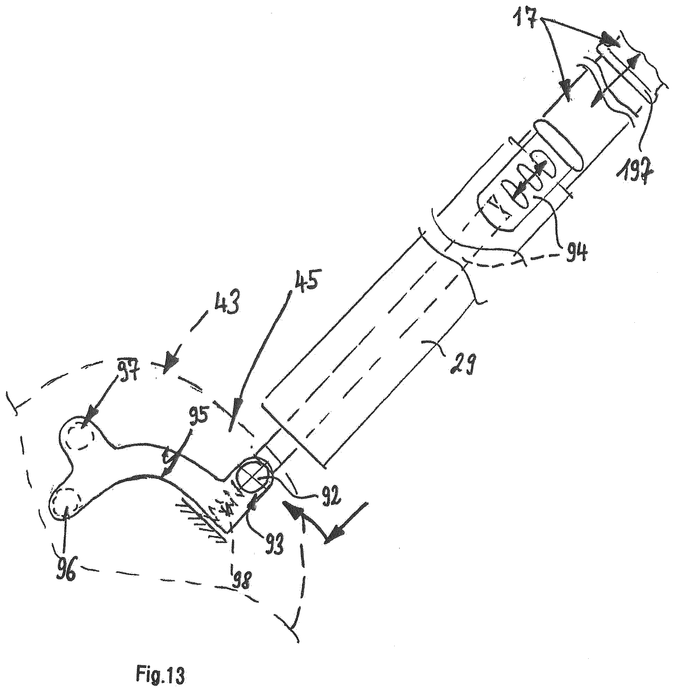

Gemäß Fig. 13 umfasst die Schalteinheit 45 einen Raststift 92 , der in der auseinandergespreizten Fahrstellung der Stabilisierungsstreben sich innerhalb einer Rastausnehmung 93 befindet. Durch einen Betätigungsschieber 94, der längs verschieblich innerhalb der Schieberaufnahme 29 gelagert ist, lässt sich der Raststift 92 aus der Rastausnehmung 93 heraus bewegen, und zwar in einen kreisbogenförmigen Führungsabschnitt 95, und zusammen mit dem Schieber 17 in eine Endstellung 96 bewegen, in der die vorderen 37 und hinteren 39 Stabilisierungsstreben vollständig zusammengefaltet sind. Zusammen mit dem Schieber 17 sind die hinteren Stabilisierungsstreben 39 in Richtung zu den vorderen Stabilisierungsstreben 37 faltbar. Der kreisbogenförmige Führungsabschnitt 95 befindet sich innerhalb des mit dem hinteren Stabilisierungsstreben 39 verbundenen hinteren Lagerabschnitts 43.

Die vorgenannten Betätigungsschieber 94 lassen sich beim vollständigen Einfahren des Schiebers 17 durch an diesem angebrachte Schaltvorsprünge 197 in die vorgenannte Entrastungsstellung bewegen. Auf diese Art und Weise lässt sich die Schalteinheit 45 durch den Schieber 17 entriegeln.

Der kreisbogenförmige Führungsabschnitt 95 kann noch eine Rastausnehmung 97 kurz vor dem Endanschlag 96 aufweisen, in die der Rastriegel 92 bei Bedarf einführbar ist und zwar durch eine auf den Rastriegel 92 einwirkende Federkraft (Feder 98). Auf diese Art und Weise lässt sich die Abstellposition des Kinderwagengestells fixieren. Die Entriegelung erfolgt dann in gleicher Weise wie die Entriegelung in der auseinandergespreizten Fahrstellung des Kinderwagengestells.

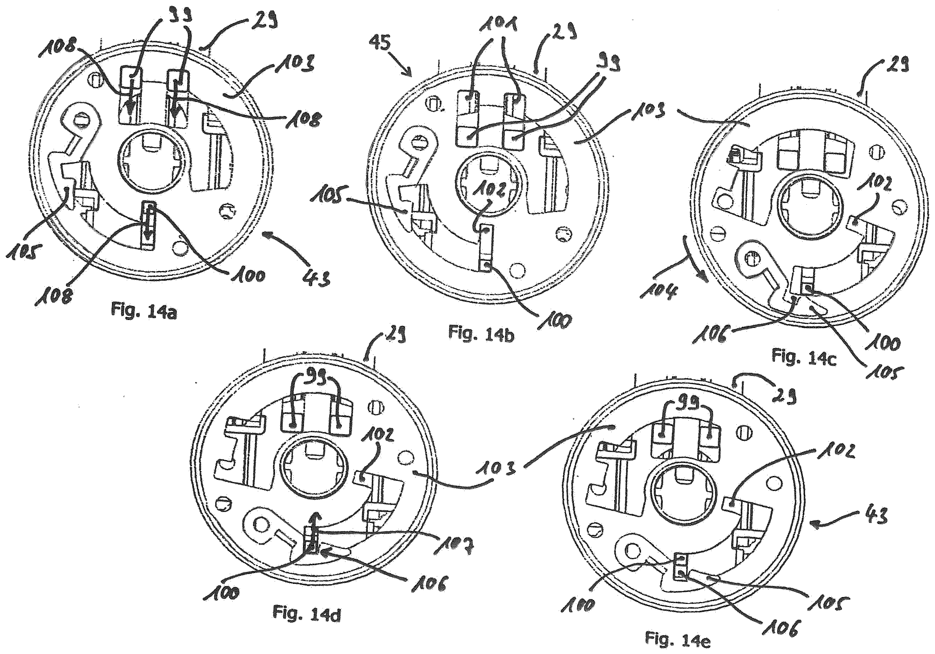

Gemäß einer weiteren alternativen Ausführungsform der Erfindung, die in den Fig. 14a bis 14e dargestellt ist, umfasst diese eine Schalteinheit 45, bei der eine Verschiebeplatte 65 an einem Ende einen, vorzugsweise zwei Rastvorsprünge 99, oder am gegenüberliegenden Ende einen weiteren Rastvorsprung 100 aufweist. Diese Rastvorsprünge 99, 100 korrespondieren mit entsprechenden Rastausnehmungen 101, 102 an einer Schaltscheibe 103 der Schalteinheit 45. Mittels des Schiebers 17 werden die vorgenannten Vorsprünge 99, 100 in eine Entriegelungsstellung gebracht (Fig. 14b, Pfeile 108 in Fig. 14a). Dann lässt sich die Schaltscheibe 1003 relativ zur Verschiebeplatte 65 drehen (Pfeil 104 in Fig. 14c), bis der eine Rastvorsprung 100 in eine Ausnehmung 106 eines federbelasteten Hakens 105 eingreift. In dieser Stellung sind die vorderen und hinteren Stabilisierungsstreben 37, 39 vollständig in Transportstellung (Fig. 14d) zusammengefaltet und verrastet. Zur Entrastung wird die Verschiebeplatte 65 mittels des Schiebers 17 in eine Entriegelungsstellung bewegt. Der kleine Verriegelungsvorsprung 100 bewegt sich dann aus der zugeordneten Ausnehmung 106 am Rasthaken 105 heraus (Pfeil 107 in Fig. 14d), sodass die Schaltscheibe 103 wieder in die ursprüngliche Stellung zurückgedreht werden kann in eine Stellung, in der die vorderen und hinteren Stabilisierungsstreben 37, 39 wieder vollständig auseinander gespreizt sind (Fig 14a). Die Verschiebeplatte (65) ist entgegen einer elastischen Vorspannung aus der Rastposition heraus bewegen.

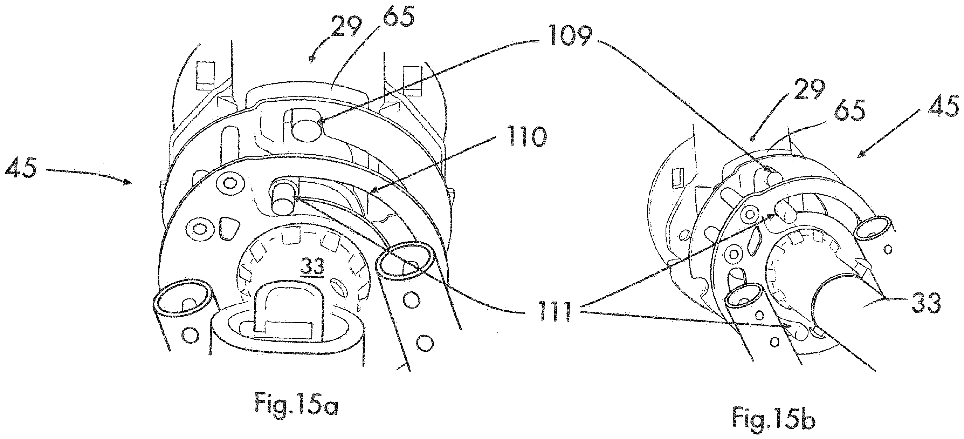

Eine weitere Ausführungsform, die in den Fig. 15a und 15b dargestellt ist, unterscheidet ferner zwischen einem mit der Verschiebeplatte (65) verbundenen Rastvorsprung 109 einerseits und einem innerhalb eines kreisbogenförmigen Führungsabschnitts 110 geführten zapfenartigen Vorsprung 111 andererseits. Dieser zapfenartige Vorsprung 111 ist dafür ausgelegt, als Drehanschlag zu dienen und Querlasten aufzunehmen. In den Endstellungen des Anschlagzapfens 111 ist der Rastvorsprung 109 querlastfrei. Der Rastvorsprung 109 dient also nur zur Definition der Verriegelungsstellung in vollständig auseinander gespreizter Position der Stabilisierungsstreben37, 39, nimmt jedoch keine Querkräfte auf.

### Bezugszeichenliste

- 1: Kinderwagengestell
- 3, 3': Hinterräder
- 5: Hinterachse
- 7, 7': Vorderräder
- 9: Vorderachse
- 11, 11': Verbindungsstück
- 13: Gelenk
- 15: Fußbetätigungsmechanismus
- 17: Schieber
- 19: Griffbereich
- 21: Höhenverstelleinrichtung
- 23: Schenkel
- 25: Pfeil
- 27: Distales Ende
- 29: Schieberaufnahme
- 31: Klemmmittel
- 33: Mittelachse
- 35, 35': Befestigungsmittel
- 37: Vordere Stabilisierungsstreben
- 39: Hintere Stabilisierungsstreben
- 41: Vorderer Lagerabschnitt
- 43: Hinterer Lagerabschnitt
- 45: Schalteinheit
- 47: Betätigungsabschnitt
- 49: Kinderwagenaufsatz
- 51: Durchgangsöffnung
- 53: Abdeckung
- 55: Führungselemente
- 56: Blockierelemente
- 57: Bolzen
- 59: Distales Ende
- 61: Betätigungselement
- 63: Pfeil
- 65: Verschiebeplatte
- 67: Führungselemente
- 69: Federelemente
- 71: Kreisförmiges Scheibenelement
- 73, 73': Nuten
- 75, 75': Rastaussparungen
- 77: Bolzen
- 79: Mitnehmerelement
- 81: Blockiereinsatz
- 83: Bolzen
- 85: Auftrittsfläche
- 87, 87': Teilabschnitte
- 89: Federelement
- 90: Rastriegel
- 91: Rastausnehmung (für Rastriegel)
- 92: Raststift
- 93: Rastausnehmung (für Raststift)
- 94: Betätigungsschieber
- 95: Führungsabschnitt
- 96: Endstellung / Endanschlag
- 97: Rastausnehmung (vor Endanschlag)
- 98: Feder
- 99: Rastvorsprung
- 100: weiterer Rastvorsprung
- 101: Rastausnehmung
- 102: Rastausnehmung
- 103: Schaltscheibe
- 104: Pfeil
- 105: Haken
- 106: Ausnehmung
- 107: Pfeil
- 108: Pfeil
- 109: Rastvorsprung
- 110: Führungsabschnitt
- 111: Vorsprung
- 197: Schaltvorsprünge
- M: Mittelebene
- D: Drehachse
- R: Richtung
- a: Abstand

## Patentansprüche

1. Kinderwagengestell (1), insbesondere Kindersportwagengestell, Buggygestell oder dergleichen Fahrzeuggestell für Kinder, mit zwei Hinterrädern (3, 3') und mindestens einem Vorderrad (7, 7'), sowie mit einem Schieber (17) zum Verschieben des Kinderwagengestells (1), und mit Befestigungsmitteln (35) zum Befestigen eines Kinderwagenaufsatzes (49), wobei die Hinterräder (3, 3') und das mindestens eine Vorderrad (7, 7') bzw. deren Drehachsen (5, 9) jeweils über ein oder mehrere hintere (39) und vordere (37) Stabilisierungsstreben um eine sich etwa parallel zur gemeinsamen Drehachse (5) der Hinterräder (3, 3') erstreckende Mittelachse (33) herum gelenkig miteinander verbunden sind derart, dass sie aus einer auseinandergespreizten Fahrstellung in eine vollständig zusammengefaltete Transportstellung und umgekehrt faltbar, und zwischen diesen beiden Stellungen in mindestens eine weitere, insbesondere eine Abstellposition, einrastbar sind.

2. Kinderwagengestell nach Anspruch 1,
**dadurch gekennzeichnet, dass**
die Stabilisierungsstreben (37, 39) auch in der vollständig zusammengefalteten Transportstellung einrastbar sind.

3. Kinderwagengestell nach Anspruch 1 oder 2,
**dadurch gekennzeichnet, dass**
die auseinandergespreizte Fahrstellung der Stabilisierungsstreben (37, 39) über die Gelenkverbindung zwischen hinteren und vorderen Stabilisierungsstreben (37, 39) fixierbar ist.

4. Kinderwagengestell einem der Ansprüche 1 bis 3,
**dadurch gekennzeichnet, dass**
die Stabilisierungsstreben (37, 39) auch in der vollständig zusammengefalteten Transportstellung und/oder in der mindestens einen weiteren Stellung, insbesondere Abstellposition über die Gelenkverbindung zwischen hinteren und vorderen Stabilisierungsstreben (37, 39) fixierbar und bei Bedarf entriegelbar sind.

5. Kinderwagengestell nach einem der vorhergehenden Ansprüche, insbesondere nach Anspruch 3 oder 4,
**dadurch gekennzeichnet, dass**
die Gelenkverbindung zwischen hinteren und vorderen Stabilisierungsstreben (37, 39) eine Schalteinheit (45) umfasst, mittels der die Gelenkverbindung aus einer Fixierstellung in eine Freigabestellung und umgekehrt schaltbar, insbesondere entrastbar ist.

6. Kinderwagengestell, insbesondere nach einem der Ansprüche 1 bis 5, bei bei dem jedes der beiden Hinterräder (3, 3') mit dem mind. einen Vorderrand (7, 7') zusätzlich über ein Verbindungsstück (11, 11'), verbunden ist,
**dadurch gekennzeichnet, dass**
die Verbindungsstücke (11, 11') faltbar ausgebildet sind derart, dass sie ein zwängungsfreies Zusammen- oder Auseinanderklappen bzw. -falten der hinteren (39) und vorderen (37) Stabilisierungsstreben um die Gelenkverbindung derselben bzw. die durch diese Gelenkverbindung definierte Mittelachse (33) ermöglichen.

7. Kinderwagengestell nach Anspruch 6,
**dadurch gekennzeichnet, dass**
die Verbindungsstücke (11, 11') etwa auf halbem Weg zwischen einem Hinterrad (3, 3') und einem Vorderrad (7, 7') jeweils ein Gelenk (13) aufweisen.

8. Kinderwagengestell nach Anspruch 6 und/oder 7,
**dadurch gekennzeichnet, dass**
an einem proximalen Ende eines Verbindungsstücks (11, 11') ein Fußbetätigungsmechanismus (15) zum Einleiten des Faltvorgangs der Stabilisierungsstreben (37, 39) und ggf. auch Verbindungsstücke (11, 11') angeordnet ist.

9. Kinderwagengestell nach einem der vorhergehenden Ansprüche 6 bis 8,
**dadurch gekennzeichnet, dass**
die Verbindungsstücke (11, 11') zumindest einen Teil eines Korbaufnahmegestänges bilden.

10. Kinderwagengestell nach einem der vorhergehenden Ansprüche,
**dadurch gekennzeichnet, dass**
die Befestigungsmittel (35) zum Befestigen eines Kinderwagenaufsatzes (49) im Bereich der Mittelachse (33) angeordnet sind.

11. Kinderwagengestell nach einem der vorhergehenden Ansprüche 5 bis 10,
**dadurch gekennzeichnet, dass**
die Schalteinheit (45) einen Betätigungsabschnitt (47) sowie einen vorderen und einen hinteren Lagerabschnitt (41, 43) aufweist, wobei der Betätigungsabschnitt (47) zur Aufnahme eines Schenkels (23) des Schiebers (17), der hintere Lagerabschnitt (43) zur Aufnahme des proximalen Endes der hinteren Stabilisierungsstrebe(n) (39) und der vordere Lagerabschnitt (41) zur Aufnahme des proximalen Endes der vorderen Stabilisierungsstrebe(n) (37) dient.

12. Kinderwagengestell nach einem der vorhergehenden Ansprüche, insbesondere nach Anspruch 11,
**dadurch gekennzeichnet, dass**
der vordere und der hintere Lagerabschnitt (41, 43) entlang der Mittelachse (33) unmittelbar nebeneinander angeordnet sind.

13. Kinderwagengestell nach einem der vorhergehenden Ansprüche, insbesondere nach einem der Ansprüche 11 oder 12,
**dadurch gekennzeichnet, dass**
der hintere und der vordere Lagerabschnitt (41, 43) in einem normalen Benutzungszustand des Kinderwagengestells (1) drehfest miteinander verbindbar sind.

14. Kinderwagengestell nach einem der vorhergehenden Ansprüche, insbesondere nach einem der Ansprüche 11 bis 13,
**dadurch gekennzeichnet, dass**
der hintere und der vordere Lagerabschnitt (41, 43) zum Einleiten eines Faltvorgangs der Verbindungsstücke (11, 11') drehbar miteinander verbindbar sind.

15. Kinderwagengestell nach einem der vorhergehenden Ansprüche, insbesondere nach einem der Ansprüche 11 bis 14,
**dadurch gekennzeichnet, dass**
ein Umschalten zwischen einer drehbaren und einer drehfesten Verbindung zwischen dem hinteren und dem vorderen Lagerabschnitt (41, 43) einer Schalteinheit (45) durch eine Verlagerung des Schiebers (17) in dem Betätigungsabschnitt (47) der jeweiligen Schalteinheit (45) erzielbar ist.

16. Kinderwagengestell nach einem der vorhergehenden Ansprüche, insbesondere nach einem der Ansprüche 11 bis 15,
**dadurch gekennzeichnet, dass**
eine Verlagerung des Schiebers (17) in dem Betätigungsabschnitt (47) eine Verlagerung eines Entriegelungsbolzens (57) entlang der Mittelachse (33) bewirkt.

17. Kinderwagengestell nach einem der vorhergehenden Ansprüche 5 bis 16,
**dadurch gekennzeichnet, dass**
die Schalteinheit (45) durch eine Verlagerung, insbesondere durch eine Schiebe- und/oder Drehbewegung des Schiebers (17) betätigbar ist.

18. Kinderwagengestell nach einem der vorhergehenden Ansprüche 11 bis 17,
**dadurch gekennzeichnet, dass**
der vordere Lagerabschnitt (41) ebenso wie der Betätigungsabschnitt (47) jeweils drehfest mit der Mittelachse (33) verbunden sind und dass die mit dem vorderen Lagerabschnitt (41) fest verbundenen Befestigungsmittel (35) zum Befestigen eines Kinderwagenaufsatzes (49) einen elastisch vorgespannten Rastriegel (90) umfassen, der mit einer am äußeren Umfang des hinteren Lagerabschnitts (43) angeordneten Rastausnehmung (91) korrespondiert und mit dieser Rastausnehmung (91) ein sogenanntes "Soft lock" bildet.

19. Kinderwagengestell nach einem der vorhergehenden Ansprüche 5 bis 18,
**dadurch gekennzeichnet, dass**
die Schalteinheit (45) einen Raststift (92) umfasst, der sich in der auseinandergespreizten Fahrstellung der Stabilisierungsstreben innerhalb einer Rastausnehmung (93) befindet, wobei sich der Raststift (92), der längs verschieblich an einer Schiebeaufnahme (29) gelagert ist, durch einen Betätigungsschieber (94), vorzugsweise in einem im Wesentlichen kreisbogenförmigen Führungsabschnitt (95), aus der Rastausnehmung (93) heraus bewegen und zusammen mit dem Schieber (17) in eine Endstellung (96) bewegen lässt, in der die vorderen (37) und hinteren (39) Stabilisierungsstreben vollständig zusammengefaltet sind.

20. Kinderwagengestell nach einem der vorhergehenden Ansprüche, insbesondere nach einem der Ansprüche 11 bis 19,
**dadurch gekennzeichnet, dass**
der Betätigungsabschnitt (47) relativ zu dem vorderen und dem hinteren Lagerabschnitt (41, 43) einer Schalteinheit (45) drehbar gelagert ist.

21. Kinderwagen, insbesondere Kindersportwagen, Buggy oder dgl. Fahrzeug für Kinder, aufweisend ein Kinderwagengestell (1) nach einem der vorhergehenden Ansprüche und einen Kinderwagenaufsatz (49), insbesondere Kinderschale, Hochstuhlgestell, Kinder-Autositz oder dgl. .

## Claims

1. A pram chassis (1), in particular a pushchair chassis, buggy chassis or suchlike vehicle chassis for children, with two rear wheels (3, 3') and with at least one front wheel (7, 7'), and with a pusher (17) for pushing the pram chassis (1), and with fastening means (35) for fastening a pram attachment (49), wherein the rear wheels (3, 3') and the at least one front wheel (7, 7') or respectively the rotary axes (5, 9) thereof are respectively connected to one another articulatedly via one or more rear (39) and front (37) stabilizing struts about a central axis (33) extending approximately parallel to the common rotary axis (5) of the rear wheels (3, 3'), such that they are able to be folded from a spread-apart travelling position into a fully folded-together transportation position and vice versa, and are able to be latched between these two positions into at least one further, in particular a parking, position.

2. The pram chassis according to Claim 1,
**characterized in that**
the stabilizing struts (37, 39) are also able to be latched in the fully folded-together transportation position.

3. The pram chassis according to Claim 1 or 2,
**characterized in that**
the spread-apart travelling position of the stabilizing struts (37, 39) is able to be fixed by means of the articulated connection between rear and front stabilizing struts (37, 39).

4. The pram chassis according to one of Claims 1 to 3,
**characterized in that**
the stabilizing struts (37, 39) are also able to be fixed in the fully folded-together transportation position and/or in the at least one further position, in particular parking position, by means of the articulated connection between rear and front stabilizing struts (37, 39) and, when required, are able to be unlocked.

5. The pram chassis according to one of the preceding claims, in particular according to Claim 3 or 4,
**characterized in that**
the articulated connection between rear and front stabilizing struts (37, 39) comprises a switching unit (45), by means of which the articulated connection is able to be switched, in particular unlatched, from a fixing position into a releasing position and vice versa.

6. A pram chassis, in particular according to one of Claims 1 to 5, in which each of the two rear wheels (3, 3') is connected to the at least one front wheel (7, 7') additionally via a connecting piece (11, 11'),
**characterized in that**
the connecting pieces (11, 11') are configured so as to be foldable such that they enable a constraint-free collapsing or unfolding or respectively folding together or apart of the rear (39) and front (37) stabilizing struts about the articulated connection thereof or respectively the central axis (33) defined by this articulated connection.

7. The pram chassis according to Claim 6,
**characterized in that**
the connecting pieces (11, 11') have respectively a joint (13) approximately half way between a rear wheel (3, 3') and a front wheel (7, 7').

8. The pram chassis according to Claim 6 and/or 7,
**characterized in that**
a foot actuating mechanism (15) for initiating the folding process of the stabilizing struts (37, 39) and if applicable also of the connecting pieces (11, 11') is arranged at a proximal end of a connecting piece (11, 11').

9. The pram chassis according to one of the preceding Claims 6 to 8,
**characterized in that**
the connecting pieces (11, 11') form at least a part of a basket receiving linkage.

10. The pram chassis according to one of the preceding claims,
**characterized in that**
the fastening means (35) for fastening a pram attachment (49) are arranged in the region of the central axis (33).

11. The pram chassis according to one of Claims 5 to 10,
**characterized in that**
the switching unit (45) has an actuating portion (47) and a front and a rear bearing portion (41, 43), wherein the actuating portion (47) serves to receive an arm (23) of the pusher (17), the rear bearing portion (43) serves to receive the proximal end of the rear stabilizing strut(s) (39), and the front bearing portion (41) serves to receive the proximal end of the front stabilizing strut(s) (37).

12. The pram chassis according to one of the preceding claims, in particular according to Claim 11,
**characterized in that**
the front and the rear bearing portion (41, 43) are arranged directly adjacent to one another along the central axis (33).

13. The pram chassis according to one of the preceding claims, in particular according to one of Claims 11 or 12,
**characterized in that**
the rear and the front bearing portion (41, 43) are able to be connected to one another in a torque-proof manner in a normal state of use of the pram chassis (1).

14. The pram chassis according to one of the preceding claims, in particular according to one of Claims 11 to 13,
**characterized in that**
the rear and the front bearing portion (41, 43) are able to be connected to one another rotatably for initiating a folding process of the connecting pieces (11, 11').

15. The pram chassis according to one of the preceding claims, in particular according to one of Claims 11 to 14,
**characterized in that**
a switching over between a rotatable and a torque-proof connection between the rear and the front bearing portion (41, 43) of a switching unit (45) is able to be achieved by a displacing of the pusher (17) in the actuating portion (47) of the respective switching unit (45).

16. The pram chassis according to one of the preceding claims, in particular according to one of Claims 11 to 15,
**characterized in that**
a displacing of the pusher (17) in the actuating portion (47) brings about a displacing of an unlocking bolt (57) along the central axis (33).

17. The pram chassis according to one of the preceding claims 5 to 16,
**characterized in that**
the switching unit (45) is able to be actuated by a displacing, in particular by a pushing- and/or rotary movement of the pusher (17).

18. The pram chassis according to one of the preceding Claims 11 to 17,
**characterized in that**
the front bearing portion (41) as well as the actuating portion (47) are respectively connected to the central axis (33) in a torque-proof manner, and that the fastening means (35), securely connected to the front bearing portion (41), for fastening a pram attachment (49), comprise an elastically pre-stressed latching bolt (90), which corresponds with a latching recess (91) arranged on the outer periphery of the rear bearing portion (43) and forms with this latching recess (91) a so-called "soft lock".

19. The pram chassis according to one of the preceding Claims 5 to 18,
**characterized in that**
the switching unit (45) comprises a latching pin (92), which in the spread-apart travelling position of the stabilizing struts is situated within a latching recess (93), wherein the latching pin (92), which is mounted so as to be longitudinally displaceable on a sliding mount (29), can be moved out from the latching recess (93) by an actuating pusher (94), preferably in a guide portion (95) substantially in the shape of a circular arc, and can be moved together with the pusher (17) into an end position (96) in which the front (37) and rear (39) stabilizing struts are fully folded together.

20. The pram chassis according to one of the preceding claims, in particular according to one of Claims 11 to 19,
**characterized in that**
the actuating portion (47) is rotatably mounted relative to the front and the rear bearing portion (41, 43) of a switching unit (45).

21. A pram, in particular a pushchair, buggy or suchlike vehicle for children, having a pram chassis (1) according to one of the preceding claims and a pram attachment (49), in particular a child carrier, high chair frame, child car seat or suchlike.

## Revendications

1. Châssis de voiture d'enfant (1), notamment châssis de poussette d'enfant, châssis de buggy ou châssis de véhicule de même type pour enfants, avec deux roues arrière (3,3') et au moins une roue avant (7,7') ainsi qu'un montant-poignée (17) pour pousser le châssis de voiture d'enfant (1) et avec des moyens de fixation (35) pour fixer un élément rapporté de voiture d'enfant (49), les roues arrière (3,3') et au moins une roue avant (7,7') ou son axe de rotation (5,9) étant respectivement reliés entre eux de façon articulée par le biais d'une ou plusieurs barres stabilisatrices arrière (39) et avant (37) autour d'un essieu central (33) s'étendant à peu près parallèlement à l'axe de rotation commun (5) des roues arrière (3,3') de telle sorte qu'elles peuvent être pliées d'une position de marche écartée à une position de transport complètement repliée et inversement et peuvent être emboîtées entre ces deux positions dans une autre position, notamment une position d'arrêt.

2. Châssis de voiture d'enfant selon la revendication 1, **caractérisé en ce que** les barres stabilisatrices (37,39) peuvent être également encliquetées dans la position de transport complètement repliée.

3. Châssis de voiture d'enfant selon la revendication 1 ou 2, **caractérisé en ce que** la position de marche écartée des barres stabilisatrices (37,39) peut être fixée par le biais de la liaison articulée entre les barres stabilisatrices arrière et avant (37,39).

4. Châssis de voiture d'enfant selon la revendication 1 à 3, **caractérisé en ce que** les barres stabilisatrices (37,39) peuvent être fixées également dans la position de transport complètement repliée et/ou dans au moins une autre position, notamment position d'arrêt par le biais de la liaison articulée entre les barres stabilisatrices arrière et avant (37,39) et déverrouillées en cas de besoin.

5. Châssis de voiture d'enfant selon l'une quelconque des revendications précédentes, notamment selon la revendication 3 ou 4, **caractérisé en ce que** la liaison articulée comprend entre les barres stabilisatrices arrière et avant (37,39), une unité d'enclenchement (45) au moyen de laquelle la liaison articulée peut être enclenchée d'une position de fixation à une position de libération et inversement, notamment décliquetée.

6. Châssis de voiture d'enfant, notamment selon l'une quelconque des revendications 1 à 5, pour lequel chacune des deux roues arrière (3,3') est reliée en plus à au moins une roue avant (7,7') par le biais d'une pièce de liaison (11,11'), **caractérisé en ce que** les pièces de liaison (11,11') sont constituées pliables de telle sorte qu'elles permettent un rabattement ou déploiement ou encore dépliage sans forçage des barres stabilisatrices arrière (39) et avant (37) autour de la liaison articulée de celles-ci ou de l'essieu central (33) défini par cette liaison articulée.

7. Châssis de voiture d'enfant selon la revendication 6, **caractérisé en ce que** les pièces de liaison (11,11') comportent respectivement une articulation (13) à peu près à mi-chemin entre une roue arrière (3,3') et une roue avant (7,7').

8. Châssis de voiture d'enfant selon la revendication 6 et/ou 7, **caractérisé en ce que** sur une extrémité proximale d'une pièce de liaison (11,11') est disposé un mécanisme d'actionnement au pied (15) pour initier le processus de pliage des barres stabilisatrices (37,39) et le cas échéant également des pièces de liaison (11,11').

9. Châssis de voiture d'enfant selon l'une quelconque des revendications précédentes 6 à 8, **caractérisé en ce que** les pièces de liaison (11,11') forment au moins une partie d'une tringlerie de réception de nacelle.

10. Châssis de voiture d'enfant selon l'une quelconque des revendications précédentes, **caractérisé en ce que** les moyens de fixation (35) sont disposés pour fixer un élément rapporté de voiture d'enfant (49) dans la zone de l'essieu central (33).

11. Châssis de voiture d'enfant selon l'une quelconque des revendications précédentes 5 à 10, **caractérisé en ce que** l'unité d'enclenchement (45) comporte une section d'actionnement (47) ainsi qu'une section de support avant et une arrière (41,43), la section d'actionnement (47) servant à loger une branche (23) du montant-poignée (17), la section de support arrière (43) à loger l'extrémité proximale de la/des barre(s) stabilisatrice(s) arrière (39) et la section de support avant (41) à loger l'extrémité proximale de la/des barre(s) stabilisatrice(s) avant (37).

12. Châssis de voiture d'enfant selon l'une quelconque des revendications précédentes, notamment selon la revendication 11, **caractérisé en ce que** la section de support avant et la section de support arrière (41,43) sont disposées directement l'une à côté de l'autre le long de l'essieu central (33).

13. Châssis de voiture d'enfant selon l'une quelconque des revendications précédentes, notamment selon l'une quelconque des revendications 11 ou 12, **caractérisé en ce que** la section de support arrière et la section de support avant (41,43) peuvent être reliées l'une à l'autre solidaires en rotation dans un état normal d'utilisation du châssis de voiture d'enfant (1).

14. Châssis de voiture d'enfant selon l'une quelconque des revendications précédentes, notamment selon l'une quelconque des revendications 11 à 13, **caractérisé en ce que** la section de support arrière et la section de support avant (41,43) peuvent être reliées l'une à l'autre pouvant tourner pour initier un processus de pliage des pièces de liaison (11,11').

15. Châssis de voiture d'enfant selon l'une quelconque des revendications précédentes, notamment selon l'une quelconque des revendications 11 à 14, **caractérisé en ce qu'**un changement entre une liaison pouvant tourner et une liaison solidaire en rotation entre la section de support arrière et la section de support avant (41,43) d'une unité d'enclenchement (45) peut être obtenu par un déplacement du montant-poignée (17) dans la section d'actionnement (47) de l'unité d'enclenchement respective (45).

16. Châssis de voiture d'enfant selon l'une quelconque des revendications précédentes, notamment selon l'une quelconque des revendications 11 à 15, **caractérisé en ce qu'**un déplacement du montant-poignée (17) dans la section d'actionnement (47) entraîne un déplacement d'un axe de déverrouillage (57) le long de l'essieu central (33).

17. Châssis de voiture d'enfant selon l'une quelconque des revendications précédentes 5 à 16, **caractérisé en ce que** l'unité d'enclenchement (45) peut être actionnée par un déplacement, notamment par un mouvement coulissant et/ou rotatif du montant-poignée (17).

18. Châssis de voiture d'enfant selon l'une quelconque des revendications 11 à 17, **caractérisé en ce que** la section de support avant (41) tout comme la section d'actionnement (47) sont respectivement reliées solidaires en rotation à l'essieu central (33) et **en ce que** les moyens de fixation (35) fixement reliés à la section de support avant (41) comprennent un verrou encliquetable (90) à précontrainte élastique pour fixer un élément rapporté de voiture d'enfant (49), qui correspond à un évidement d'encliquetage (91) disposé sur la périphérie extérieure de la section de support arrière (43) et forme avec cet évidement d'encliquetage (91) un dit «blocage souple ».

19. Châssis de voiture d'enfant selon l'une quelconque des revendications précédentes 5 à 18, **caractérisé en ce que** l'unité d'enclenchement (45) comprend une broche d'arrêt (92), qui se trouve à l'intérieur d'un évidement d'encliquetage (93) dans la position de marche écartée des barres stabilisatrices, la broche d'arrêt (92), qui est logée longitudinalement mobile sur un évidement de coulissement (29), peut être déplacée hors de l'évidement d'encliquetage (93) par un coulisseau d'actionnement (94), de préférence dans une section de guidage (95) pour l'essentiel en forme d'arc de cercle et peut être déplacée avec le montant-poignée (17) dans une position de butée (96) dans laquelle les barres stabilisatrices avant (37) et arrière (39) sont complètement repliées.

20. Châssis de voiture d'enfant selon l'une quelconque des revendications précédentes, notamment selon l'une quelconque des revendications 11 à 19, **caractérisé en ce que** la section d'actionnement (47) est logée pouvant tourner par rapport à la section de support avant et la section de support arrière (41,43) d'une unité d'enclenchement (45).

21. Voiture d'enfant, notamment poussette, buggy ou véhicule de même nature pour enfants, comportant un châssis de voiture d'enfant (1) selon l'une quelconque des revendications précédentes et un élément rapporté de voiture d'enfant (49), notamment un porte-bébé, châssis de chaise haute, siège auto pour enfants ou éléments analogues.
